(19) Europäisches Patentamt
European Patent Office
Office européen des brevets

(11) **EP 4 390 636 A1**

(12) **EUROPEAN PATENT APPLICATION**

(43) Date of publication:
**26.06.2024 Bulletin 2024/26**

(21) Application number: **22307018.6**

(22) Date of filing: **22.12.2022**

(51) International Patent Classification (IPC):
**G06F 3/0346** (2013.01) **G06F 3/0354** (2013.01)
**G01B 7/00** (2006.01) **G01D 5/14** (2006.01)

(52) Cooperative Patent Classification (CPC):
**G06F 3/0346; G01B 7/00; G06F 3/0354;
G06F 3/03543; G06F 3/03545**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Advanced Magnetic Interaction, AMI
38170 Seyssinet-Pariset (FR)**

(72) Inventors:
• **HAUTSON, Tristan
38170 Seyssinet-Pariset (FR)**
• **JOBERT, Timothée
38170 Seyssinet-Pariset (FR)**
• **PELLERANO, Vincent
38170 Seyssinet-Pariset (FR)**

(74) Representative: **Peterreins Schley
Patent- und Rechtsanwälte PartG mbB
Hermann-Sack-Straße 3
80331 München (DE)**

(54) **PERMANENT MAGNET ASSEMBLIES FOR PASSIVE ACCESSORIES**

(57) The present disclosure relates to a permanent magnet assembly for a user-borne device is provided. The permanent magnet assembly comprises at least two sub-magnets. The at least two sub-magnets each have a magnet body defining a respective longitudinal axis. Each sub-magnet creates a magnetic field and has a respective magnetic moment vector associated to the respective sub-magnet. At least one magnetic moment vector is inclined relative to the respective longitudinal axis. Two adjacent sub-magnets of the at least two sub-magnets are attached together to form a main body of the permanent magnet assembly. The main body has a main body longitudinal axis and defines an assembly magnetic moment vector. The at least two sub-magnets are arranged coaxial to each other and are rotationally oriented relative to each other such that the assembly magnetic moment vector is less or equally inclined relative to the main body longitudinal axis than a weighted average inclination of the magnetic moment vectors of the at least two sub-magnets.

Fig. 1

Processed by Luminess, 75001 PARIS (FR)

## Description

## TECHNICAL FIELD

The present disclosure relates to the technical field of determining and/or tracking a location of passive accessories, specifically to a permanent magnet assembly for a user-borne device and to a system for determining a manipulation of a user-borne device by a user. More specifically, the present disclosure relates to a method for manufacturing a permanent magnet assembly for a user-borne device.

## BACKGROUND

In the technical field of location determination and/or tracking of a device held or worn by user (i.e., a user-borne device), the provision of a plurality of magnetometers allows to measure a magnetic field associated with a magnetic object arranged in or coupled to the user-borne device. The user-borne devices using this technology may be electronically and/or electrically passive. More specifically, electrically passive means that the user-borne device may not comprise a power source (e.g., batteries) and/or means to receive power (e.g., wireless power transmission via an inductive coil) for powering an electronic feature of the user-borne device. Electronically passive means that no computation or processing occurs (or happens) on the user-borne device. The magnetometer measurements enable determining and/or tracking of the location of the magnetic object within a sensing volume created by the plurality of magnetometers. The location may include a position and/or orientation of the magnetic object. In some applications, the magnetic object may be arranged within a writing device (e.g., a stylus) which may be operated by a user on a writing support during a user operation. Based on the magnetic field measurements associated with the magnetic object, a location of the writing device on the writing support may be determined.

In current applications, a magnetic object arranged in or coupled to a user-borne device may be approximated by a dipole to allow its location determination and/or tracking within a sensing volume created by the plurality of magnetometers. Specifically, the magnetic object may be a permanent magnet. The magnetic object approximated as a dipole may create a magnetic field which is rotationally symmetric about at least one axis. Such a magnetic object may be manipulated by a user within the sensing volume and may allow a tracking and/or location determination of its movement in five degrees of freedom. The five degrees of freedom may include a translation of the magnetic object (and the user-borne device, to which the magnetic object is coupled to) along three axes, a first rotation about a first axis and a second rotation about a second axis. A rotation of the magnetic object about the at least one axis, to which the magnetic field is rotationally symmetric, may not be detectable. In applications a magnetic object is used having a shape with a body axis about which the magnetic object is rotationally symmetric, for instance a ring shape or a cylinder shape. When a magnetic object with a rotationally symmetric magnetic field is desired, in an ideal case, the magnetization direction coincides with the body axis about which the magnetic object is rotationally cylindrical. However, current approaches of providing an almost perfect alignment of magnetization direction (e.g. less than 0.5° angular deviation) and body axis are very complex and expensive. One example approach of providing an almost perfect alignment of magnetization direction may be done by sorting out magnetic objects which do not possess a perfect alignment of magnetization direction. The sorted out magnetic objects may be recycled. Still this approach is very time consuming, energy consuming, costly and leads to an overall complex process of providing magnetic objects with an almost perfect alignment of magnetization direction On the other side, the more the magnetization direction deviates from the body axis, the more the accuracy of the location determination and/or tracking of the magnetic object and the user-borne device to which the magnetic object is mounted deteriorates.

The object of the present disclosure is to cost-efficiently improve the accuracy of the location determination and/or tracking of the magnetic object and the user-borne device to which the magnetic object is mounted to.

## SUMMARY

The present disclosure relates to a permanent magnet assembly as defined in claim 1, a user-borne device as defined in claim 10 and a system for determining a manipulation of a user-borne device by a user as defined in claim 11. According to claim 13, a method for manufacturing a permanent magnet assembly is provided. The dependent claims depict embodiments of the present disclosure.

According to a first aspect of the present disclosure, a permanent magnet assembly for a user-borne device is provided. The permanent magnet assembly comprises at least two sub-magnets. The at least two sub-magnets each have a magnet body defining a respective longitudinal axis. Each sub-magnet creates a magnetic field and has a respective magnetic moment vector associated to the respective sub-magnet. At least one magnetic moment vector is inclined relative to the respective longitudinal axis. Two adjacent sub-magnets of the at least two sub-magnets are attached together to form a main body of the permanent magnet assembly. The main body has a main body longitudinal axis and defines an assembly magnetic moment vector. The at least two sub-magnets are arranged coaxial to each other and are rotationally oriented relative to each other such that the assembly magnetic moment vector is less or equally inclined relative to the main body longitudinal axis than a weighted average inclination of the magnetic moment vectors of the at least two sub-magnets. The weighted average inclination may be defined by a sum of single inclinations of the sub-magnet magnetic moment vectors relative to their respective longitudinal axis and respectively weighted by a length of the magnetic moment vector of the respective sub-magnet. Specifically, the assembly magnetic moment vector may only then be equally inclined to a weighted average inclination of the magnetic moment vectors of the at least two sub-magnets, when not all magnetic moment vectors of the sub-magnets of the permanent magnet assembly are inclined relative to the respective longitudinal axis. More specifically, the assembly magnetic moment vector may only then be equally inclined to a weighted average inclination of the magnetic moment vectors of the at least two sub-magnets, when only one magnetic moment vector of the sub-magnets of the permanent magnet assembly is inclined relative to the respective longitudinal axis. Specifically, the assembly magnetic moment vector may only then be less inclined to a weighted average inclination of the magnetic moment vectors of the at least two sub-magnets, when at least two magnetic moment vectors of the sub-magnets of the permanent magnet assembly are inclined relative to the respective longitudinal axis. The permanent magnet assembly may provide an improved accuracy of being located. Particularly in comparison to a magnetic object which does not comprise at least two sub-magnets, the disclosed permanent magnet assembly may be more cost efficient and/or may possess a resulting magnetic moment vector which is more aligned to the main body longitudinal axis.

According to a second aspect of the present disclosure, a user-borne device is provided. The user-borne device is operable in a sensing volume created by a plurality of magnetometers. The user-borne device comprises at least one permanent magnet assembly according to the first aspect. The user-borne device further comprises a housing in which the permanent magnet assembly is arranged at a predetermined location.

According to a third aspect of the present disclosure, a system for determining a manipulation of a user-borne device by a user is provided. The system comprises the user-borne device according to the second aspect, and a plurality of magnetometers. The plurality of magnetometers is configured to create a sensing volume and configured to measure a magnetic field associated with the at least one permanent magnet assembly. The system is further configured to track movement and/or location of the at least one permanent magnet assembly in at least five degrees of freedom.

According to a fourth aspect of the present disclosure, method for manufacturing a permanent magnet assembly with a desired predetermined magnetic strength is provided. The method comprises providing a first sub-magnet and at least a second sub-magnet. Each of the first sub-magnet and the second sub-magnet have a magnet body defining a respective longitudinal axis.

The method further comprises putting the first sub-magnet and the second sub-magnet coaxially together to form a main body of the permanent magnet assembly. The first sub-magnet and the second sub-magnet are put together such that the respective longitudinal axes coincide and define a main body longitudinal axis. The method further includes evaluating an assembly magnetic moment vector resulting from the magnetic field created conjoinedly by the first sub-magnet and the second sub-magnet by means of a processing unit. Additionally, the method includes rotationally arranging the first sub-magnet relative to the second sub-magnet about the respective longitudinal axis such that an inclination of the assembly magnetic moment vector with respect to the main body longitudinal axis is minimal. Specifically, the method may include using a plurality of magnetometers to measure the magnetic field created by the sub-magnets and/or the permanent magnet assembly. The method may provide a permanent magnet assembly which is more cost efficient and/or possesses a resulting magnetic moment vector which is more aligned to the main body longitudinal axis in comparison to a magnetic object which does not comprise at least two sub-magnets. Thereby the method results in a permanent magnet assembly whose location can be determined and/or tracked with improved accuracy. Specifically, the orientation of the permanent magnet assembly will be substantially coaxial with the longitudinal body main body axis. For instance, when the permanent magnet assembly is mounted in a pointer or stylus, the accuracy of pointing and/or writing may be related to the accuracy of orientation, and therefore may be improved.

## BRIEF DESCRIPTION OF THE DRAWINGS

Other characteristics will be apparent from the accompanying drawings, which form a part of this disclosure. The drawings are intended to further explain the present disclosure and to enable a person skilled in the art to practice it. However, the drawings are intended as non-limiting examples. Common reference numerals on different figures indicate like or similar features.

| | |
|---|---|
| Fig. 1 | is a schematic view of a system for determining a manipulation of a user-borne device according to a third aspect of the present disclosure including a user-borne device according to the second aspect of the present disclosure; |
| Figs. 2A and 2B | are schematic views of a prior art magnetic object; |
| Figs. 3A and 3B | are schematic views of a first sub-magnet of a first example arrangement permanent magnet assembly according to the first aspect; |
| Figs. 4A and 4B | are schematic views of a second sub-magnet of the first example ar- |

rangement permanent magnet assembly according to the first aspect;

**Figs. 5A to 5D** are schematic views of the first arrangement of a permanent magnet assembly comprising the first sub-magnet of Figs. 3a and 3b, and the second sub-magnet of Figs. 4a and 4b;

**Figs. 6A and 6B** are schematic views of a first sub-magnet of a second example arrangement permanent magnet assembly according to the first aspect;

**Figs. 7A and 7B** are schematic views of a second sub-magnet of the second example arrangement permanent magnet assembly according to the first aspect;

**Figs. 8A and 8B** are schematic views of a third sub-magnet of the second example arrangement permanent magnet assembly according to the first aspect;

**Figs. 9A to 9C** are schematic views of the second arrangement of a permanent magnet assembly comprising the first sub-magnet of Figs. 6a and 6b, the second sub-magnet of Figs. 7a and 7b, and the third sub-magnet of Figs. 8a and 8b;

**Figs. 10A to 10C** are schematic views of a third example arrangement of a permanent magnet assembly comprising the first, second, and third sub-magnets whereby the transversal vector component of the third sub-magnet is larger than the sum of the transversal vector components of the first and the second sub-magnets;

**Fig. 11** schematically illustrates a process flow diagram of a method for manufacturing a permanent magnet assembly according to the fourth aspect of the present disclosure.

## DETAILED DESCRIPTION

Embodiments of the permanent magnet assembly, the user-borne device, the system for determining a manipulation of a user-borne device by a user, and the method for manufacturing the permanent magnet assembly according to the present disclosure will be described in reference to the drawings as follows.

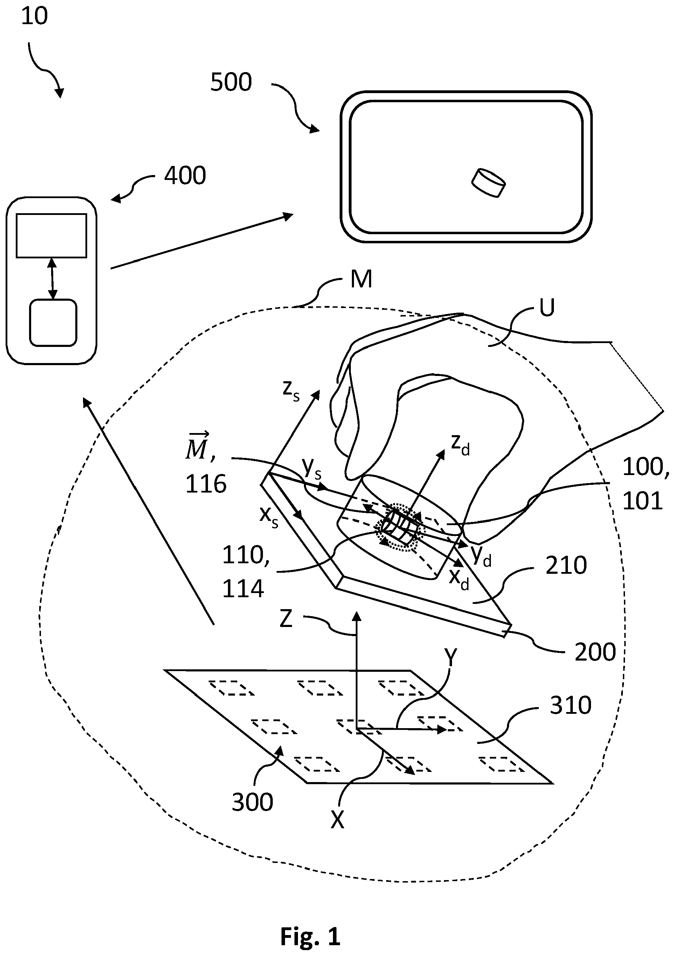

**Fig. 1** schematically illustrates a user-borne device 100 and a system 10 for determining a manipulation of the user-borne device 100 by a user U according to aspects of the present disclosure. The user-borne device 100 comprises a housing 101 and a permanent magnet assembly 110. The permanent magnet assembly 110 is arranged at a predetermined location in housing 101 of the user-borne device 100. Thereby a location of the user-borne device 100 can be determined and/or tracked based on a determined and/or tracked location of the permanent magnet assembly 110. The permanent magnet assembly 110 has a main body 114 which defines a main body longitudinal axis 116 and an assembly magnetic moment vector $\vec{M}$. More specifically, the permanent magnet assembly 110 may be modelized as an assembly magnetic moment vector $\vec{M}$. In embodiments, the permanent magnet assembly 110, more specifically the main body 114, may be arranged movably, specifically rotatable and/or translatable, with respect to the housing 101 of the user-borne device 100.

The system 10 comprises the user-borne device 100 according to any of the embodiments and/or features described herein. The system 10 further comprises a plurality of magnetometers 300. The plurality of magnetometers 300 may be configured to create a sensing volume M. The plurality of magnetometers 300 may be associated with a magnetometer plane 310 (see, Fig. 1). More specifically, the magnetometer plane 310 may be defined by a plane that may extend through a majority of the plurality of magnetometers 300. As shown in Fig. 1, the system 10 may comprise a reference coordinate system XYZ. The plurality of magnetometers 300 may be associated with the reference coordinate system XYZ. The system 10 is configured to define the reference coordinate system XYZ relative to the plurality of magnetometers 300. The reference coordinate system XYZ may comprise a first reference axis X, a second reference axis Y and a vertical reference axis Z. The first reference axis X and the second reference axis Y may be orthogonal to each other. The vertical reference axis Z may be orthogonal to the first reference axis X and the second reference axis Y. The vertical reference axis Z may extend through a center of the plurality of magnetometers 300. In embodiments, the first reference axis X and the second reference axis Y may be defined on the magnetometer plane 310. In this case, the vertical reference axis Z may be orthogonal to the magnetometer plane 310. In embodiments, the plurality of magnetometers 300 may be integrated in a wall, a furniture, a notebook, an electronics device, a screen or display, keyboard, a manufacturing stage, a manufacturing bench, a calibration stage and/or a mouse pad.

In embodiments, the user-borne device 100 may be operable within the sensing volume M. Specifically, the user-borne device 100 may be operable on or above an interaction surface 210. More specifically, the interaction surface 210 may be defined within the sensing volume M. The interaction surface 210 may be understood as physical constraints related to the plurality of magnetometers 300. For instance, the interaction surface 210 may defined with respect to the plurality of magnetometers 300 and/or the reference coordinate system XYZ by a first set of geometric parameters. More specifically, the first set of geometric parameters may be indicative of a geometry of the interaction surface 210. The first set of geometric parameters may include a point on the interaction surface 210 and a normal vector (thereby defining an infinite surface), at least three coplanar points defining a finite surface, a center point, a radius and a normal vector in case of a disk-shaped surface, and/or two axes defined on the surface (e.g., two dimensions may define a rectangular surface). The interaction surface configuration as described above may be based on the first set of geometric parameters. The interaction surface 210 may comprise a set of partial surfaces with different orientations and/or positions to each other. This allows to determine a user-borne device location on any surface, even complex surfaces (e.g., by polygonal shapes of the surfaces, curved surfaces). The first set of geometric parameters may comprise predefined geometric parameters associated with the interaction surface 210.

The plurality of magnetometers 300 may be configured to measure a magnetic field associated with the permanent magnet assembly 110. Each magnetometer of the plurality of magnetometers 300 may be configured to measure the magnetic field associated with the at least one permanent magnet assembly 110 in the direction of the first reference axis X, the second reference axis Y, and/or the vertical reference axis Z. In other words, each magnetometer of the plurality of magnetometers 300 may be configured to perform magnetic field measurements in the direction of one axis (i.e., one dimension), two axes (i.e., two dimensions), or three axes (i.e., three dimensions). The number of magnetometers provided may depend on the size of the interaction surface 210, on which the user-borne device 100 is operated, or, on the desired size of the sensing volume within which the user-borne device 100 is operated. The plurality of magnetometers 300 may be configured to collect magnetic field measurements associated with the at least one permanent magnet assembly 110 within the sensing volume up to a maximum measurement distance. In embodiments, the maximum measurement distance may be 18cm, more specifically 15cm. In other embodiments, the maximum measurement distance may be larger than 18cm, for instance about 30cm depending on the magnetic strength of the permanent magnet assembly 110 which is to be measured or tracked. In embodiments, the maximum measurement distance may be defined between a furthest point on the interaction surface 210 or within the sensing volume to a closest magnetometer of the plurality of magnetometers 300.

In embodiments, the system 10 may comprise an interaction support 200 having an interaction support surface (see, Fig. 1). The interaction surface 210 may be at least a partial surface of the interaction support surface. The interaction support 200 may not comprise ferromagnetic properties, e.g., ferromagnetic particles. In embodiments, the interaction support 200 may be a furniture (e.g., a table), a notebook, an electronics device, a screen or display, a plate, a wall, a keyboard or a mouse pad. The interaction surface 210 may be defined based on the first set of geometric parameters associated with the interaction support 200. More specifically, the type of interaction support 200 may be known, e.g., a notebook or mouse pad. Such an interaction support 200 may be defined by a set of predefined geometric parameters. A partial surface of the interaction support surface may be used as interaction surface 210. Thus, the set of predefined parameters may include data, more specifically geometric data, associated with an interaction surface configuration of the interaction surface 210. As an example, these parameters may be indicative of a position and/or orientation of the interaction surface 210 relative to the reference coordinate system XYZ. In embodiments, the first set of geometric parameters may be determined by interaction surface recognition, which is described below.

The interaction surface 210 may be defined within the sensing volume M. The interaction surface 210 may comprise a first surface axis $x_s$, a second surface axis $y_s$, and a vertical surface axis $z_s$, more specifically wherein the axes may be orthogonal with respect to each other (see, e.g., Fig. 1). The first surface axis $x_s$ and the second surface axis $y_s$ may be defined on the interaction surface 210. In embodiments, the plurality of magnetometers 300 may be arranged in the interaction support 200 or may be attached to the interaction support 200.

In the exemplary configuration according to Fig. 1, the user-borne device 100 is a dial. In other embodiments, the user-borne device 100 may be a computer mouse, a keyboard, a toy, a stylus, or a brush. In embodiments, the user-borne device 100 may be an accessory tool, e.g., a ruler. The user-borne device 100 may comprise a device coordinate system $x_d$, $y_d$, $z_d$. The housing 101 of the user-borne device 100 may define a first device axis $x_d$, a second device axis $y_d$ orthogonal to the first device axis $x_d$, and a vertical device axis $z_d$. The vertical device axis $z_d$ may be orthogonal to a plane defined by the first device axis $x_d$ and the second device axis $y_d$. In embodiments, the vertical device axis $z_d$ may be orthogonal to a device contact surface or point and/or orthogonal to a plane defined by the first device axis $x_d$ and the second device axis $y_d$. The device contact surface or point may be the part of the user-borne device 100 which, during a user operation, may be in contact with an interaction surface 210 (i.e., the surface on which the user-borne device 100 may be operated in some embodiments). In the dial 100 of Fig. 1, the main body longitudinal axis 116 is arranged orthogonally to the vertical device axis $z_d$. In other embodiments of the dial or another user-borne device 100, the main body longitudinal axis 116 may arranged parallelly or inclinedly to the vertical device axis $z_d$. In some embodiments, the device coordinate system may be defined within a geometric center of the user-borne device 100.

The user-borne device 100 may be electrically and/or electronically passive. More specifically, electrically passive means that the user-borne device 100 may not comprise a power source (e.g., batteries) and/or means to receive power (e.g., wireless power transmission via an inductive coil) for powering a feature (e.g., an electronic feature) of the user-borne device 100. Electronically passive means that no computation or processing occurs (or happens) on the user-borne device 100. Thereby, the user-borne device 100 can be easily recycled causing less impact on the environment.

The system 10, specifically the plurality of magnetometers 300, is configured to measure a magnetic field associated with the at least one permanent magnet assembly 110. The system 10 may be configured to determine a permanent magnet assembly location of the at least one permanent magnet assembly 110 based on the collected magnetic field measurements within the sensing volume M relative to the reference coordinate system XYZ. The permanent magnet assembly location may include a permanent magnet assembly position and/or a permanent magnet assembly orientation associated with the at least one permanent magnet assembly 110 relative to the reference coordinate system XYZ. The system 10 may be further configured to evaluate the assembly magnetic moment vector $\vec{M}$ and a position vector indicative of a position of the permanent magnet assembly 110. More specifically, the assembly magnetic moment vector $\vec{M}$ and the position vector may be derived from the measured magnetic field of the permanent magnet assembly 110 to represent the permanent magnet assembly 110. The system 10 may specifically be configured to track a movement and/or location of the at least one permanent magnet assembly 110 in at least five degrees of freedom.

The user-borne device 100 and/or the at least one permanent magnet assembly 110 may be mobile, i.e., freely movable within the reference coordinate system XYZ. In other words, during a user operation (i.e., an operation wherein the user-borne device 100 and/or the at least one permanent magnet assembly 110 is operated by a user), the user-borne device 100 within the sensing volume M and/or relative to an interaction surface 210 may be manipulated by a user U within the sensing volume M. The manipulation of the user-borne device 100 may include a manipulation of the location of the user-borne device 100 and/or a manipulation of one or more manipulation features of the user-borne device 100. In other words, the user-borne device 100 may comprise one or more manipulation features, e.g. a feature which is movable relative to the housing 101 of the user-borne device 100 to trigger at least one specific event (i.e. a trigger event) associated with an additional function. The at least one trigger event such as a click event, a scroll event or a selection event may cause an action and/or may be used to control an action in a digital environment (i.e., an environment which is controlled by a computer or a network of computers), more specifically a virtual environment, based on a user input. The manipulation of the location of the user-borne device 100 may include a manipulation of an orientation of the user-borne device 100 and/or a manipulation of a position of the user-borne device 100. In some embodiments, the system 10 may be configured to determine a first type trigger event when the tracked movement includes a rotation of the at least one permanent magnet assembly 110 about a first trigger axis which is not the main body longitudinal axis 116. In embodiments, the system 10 may be further configured to determine a second type trigger event when the tracked movement includes a rotation of the at least one permanent magnet assembly 110 about a second trigger axis which is not the main body longitudinal axis 116 and which is different from the first trigger axis. Specifically, the first trigger axis may be orthogonally to the main body longitudinal axis 116. Specifically, the second trigger axis may be orthogonally to the first trigger axis and/or orthogonally to the main body longitudinal axis 116.

The system 10 may further comprise a processing unit 400. Alternatively, the system 10 may be connectable to a processing unit 400. The processing unit 400 may be configured to determine a location and/or to track a movement of the at least one permanent magnet assembly 110 in at least five degrees of freedom. The location may include a position and/or orientation of the at least one permanent magnet assembly 110. The processing unit 400 may be further configured to determine a trigger event. In embodiments, the system 10 may comprise an electronics device. In embodiments, the processing unit 400 may be integrated in the electronics device. In embodiments, the electronics device may be a tablet, a cell phone, a laptop, a computer, a virtual reality (VR) set or a television.

In embodiments, the system 10, more specifically, the processing unit 400 may be configured to track the user-borne device 100 and/or the at least one permanent magnet assembly 110 over a time period comprising multiple time samples. During a user operation, the system 10 may be configured to track a movement and/or a manipulation of the user-borne device 100 within the sensing volume and/or relative to the interaction surface 210 over a time period. More specifically the system 10 may be configured to determine a position and/or orientation of the at least one permanent magnet assembly 110 at each time sample and may store the determined locations (or interactions) for each time sample.

The system 10 may further comprise at least one output interface 500 (see, Fig. 1). The at least one output interface 500 may be configured to represent the user-borne device 100. More specifically the at least one output interface 500 may be configured to visually reproduce the user-borne device 100 as a virtual object. The system 10 may be configured to reproduce the manipulation of the user-borne device 100 as a manipulation of the virtual object on the at least one output interface 500. The system 10 may be configured to visually reproduce the trigger event on the at least one output interface 500. In embodiments, the output interface 500 may be a display or a screen or a VR headset. A translation of the user-borne device 100 in a direction on the interaction surface 210 may be represented as a translation of the represented user-borne device 100 on the at least one output device 500.

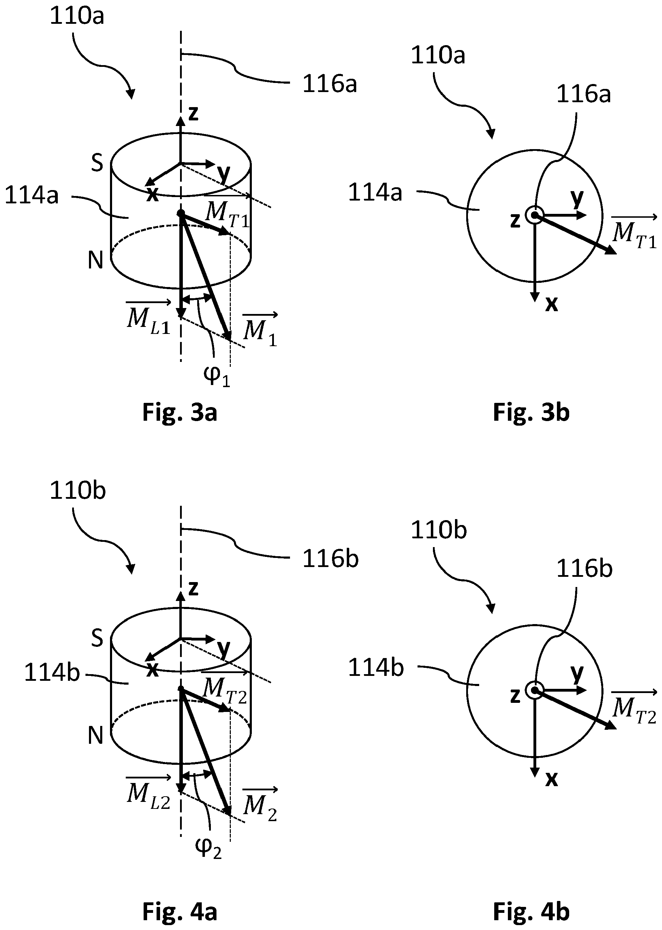

With reference to **Figs. 3 to 10,** the permanent magnet assembly 110 comprises at least two sub-magnets 110a, 110b, 110c. Each of the at least two sub-magnets 110a, 110b, 110c has a magnet body 114a, 114b, 114c defining a respective longitudinal axis 116a, 116b, 116c. Each sub-magnet 110a, 110b, 110c creates a magnetic field and has a respective magnetic moment vector $\overrightarrow{M_1}, \overrightarrow{M_2}, \overrightarrow{M_3}$ associated to the respective sub-magnet 110a, 110b, 110c. At least one magnetic moment vector $\overrightarrow{M_1}, \overrightarrow{M_2}, \overrightarrow{M_3}$ is inclined relative to the respective longitudinal axis 116a, 116b, 116c. Two adjacent sub-magnets 110a, 110b, 110c of the at least two sub-magnets 110a, 110b, 110c are attached together to form the main body 114 of the permanent magnet assembly 110. The at least two sub-magnets 110a, 110b, 110c are arranged coaxial to each other and are rotationally oriented relative to each other such that the assembly magnetic moment vector $\overrightarrow{M}$ is less or equally inclined relative to the main body longitudinal axis 116 than a weighted average inclination of the magnetic moment vectors $\overrightarrow{M_1}, \overrightarrow{M_2}, \overrightarrow{M_3}$ of the at least two sub-magnets 110a, 110b, 110c.

The weighted average inclination may be defined by a sum of single inclinations $\varphi_1$, $\varphi_2$, $\varphi_3$ of the sub-magnet magnetic moment vectors $\overrightarrow{M_1}, \overrightarrow{M_2}, \overrightarrow{M_3}$ relative to their respective longitudinal axis 116a, 116b, 116c and respectively weighted by a length of the magnetic moment vector $\overrightarrow{M_1}, \overrightarrow{M_2}, \overrightarrow{M_3}$ of the respective sub-magnet 110a, 110b, 110c.

The weighted average inclination may be described by the following formula:

$$\overline{\varphi} = \frac{1}{\sum\limits_{i=1}^{n \geq 2} \left\| \vec{M_i} \right\|} \sum\limits_{i=1}^{n \geq 2} \left\| \vec{M_i} \right\| \varphi_i$$

Thereby (n) is the total number of sub-magnets 110a, 110b, 110c comprised in the permanent magnet assembly 110, e.g. two, three or more than three sub-magnets 110a, 110b, 110c. ($\varphi_i$) is the single inclination of a sub-magnet 110a, 110b, 110c. For instance, $\varphi_1$ is the single inclination of the first sub-magnet 110a, more specifically the inclination of the magnetic moment vector $\overrightarrow{M_1}$ of the first sub-magnet 110a relative to the longitudinal axis 116a of the first sub-magnet 110a. ($|\vec{M_i}|$) is the length of a magnetic moment vector $\overrightarrow{M_1}, \overrightarrow{M_2}, \overrightarrow{M_3}$ of the respective sub-magnet 110a, 110b, 110c.

In embodiments, the assembly magnetic moment vector $\overrightarrow{M}$ may only then be equally inclined to a weighted average inclination of the magnetic moment

vectors $\overrightarrow{M_1}, \overrightarrow{M_2}, \overrightarrow{M_3}$ of the at least two sub-magnets 110a, 110b, 110c, when not all magnetic moment vectors $\overrightarrow{M_1}, \overrightarrow{M_2}, \overrightarrow{M_3}$ of the sub-magnets 110a, 110b, 110c of the permanent magnet assembly 110 are inclined relative to the respective longitudinal axis 116a, 116b, 116c. More specifically, the assembly magnetic moment vector $\overrightarrow{M}$ may only then be equally inclined to a weighted average inclination of the magnetic moment vectors $\overrightarrow{M_1}, \overrightarrow{M_2}, \overrightarrow{M_3}$ of the at least two sub-magnets 110a, 110b, 110c, when only one magnetic moment vector $\overrightarrow{M_1}, \overrightarrow{M_2}, \overrightarrow{M_3}$ of the sub-magnets 110a, 110b, 110c of the permanent magnet assembly 110 is inclined relative to the respective longitudinal axis 116a, 116b, 116c.

In embodiments, the assembly magnetic moment vector $\overrightarrow{M}$ may only then be less inclined than a weighted average inclination of the magnetic moment vectors $\overrightarrow{M_1}, \overrightarrow{M_2}, \overrightarrow{M_3}$ of the at least two sub-magnets 110a, 110b, 110c, when at least two magnetic moment vectors $\overrightarrow{M_1}, \overrightarrow{M_2}, \overrightarrow{M_3}$ of the sub-magnets 110a, 110b, 110c of the permanent magnet assembly 110 are inclined relative to the respective longitudinal axis 116a, 116b, 116c.

The permanent magnet assembly 110 according to the present disclosure may provide an improved accuracy of being located. In other words, the accuracy of determining and/or tracking a location of the permanent magnet assembly 110 by a plurality of magnetometers 300 may be improved. Particularly in comparison to a magnetic object which does not comprise at least two sub-magnets 110a, 110b, 110c, the disclosed permanent magnet assembly 110 may be more cost efficient and/or may possess an assembly magnetic moment vector $\overrightarrow{M}$ which is more aligned to the main body longitudinal axis 116.

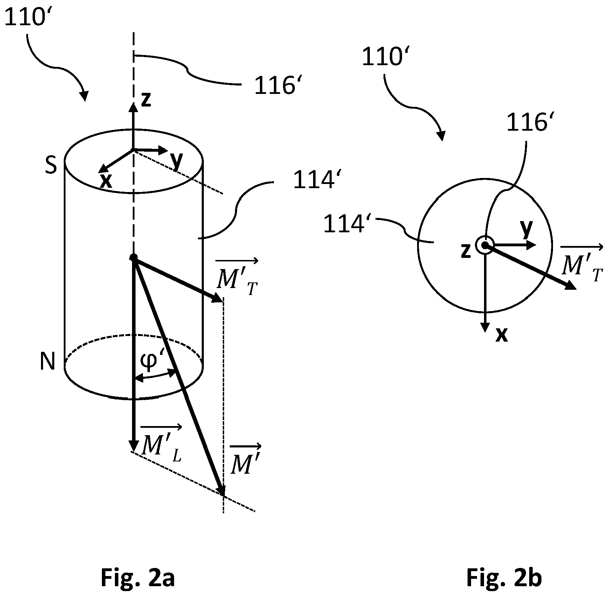

To better illustrate these advantageous technical effects, **Figs. 2a and 2b** very schematically show a standard magnetic object 110' in comparison. This standard magnetic object 110' may be a permanent magnet and have a cylindrical main body 114' which defines a longitudinal main body axis 116'. The prior art magnetic object 110' is magnetized along the longitudinal main body axis 116' but the resulting magnetic field is not ideal and deviates from the mechanical main body axis 116'. Therefore, the associated magnetic moment vector $\overrightarrow{M}'$ deviates, more specifically angularly deviates, from the longitudinal main body axis 116'. The angle $\varphi'$ is measure for the angular deviation. In examples, the angular deviation $\varphi'$ of a standard magnetic object 110' may be about 5° +/- 1°. For easier reference, an example magnet reference coordinate system xyz is depicted in the figures. The angular deviation $\varphi'$ negatively affects the measurement result when the standard magnetic object 110' is operated in a sensing volume M of a plurality of magnetometers 300. Just to name an example, when the standard magnetic object 110' is used in user borne device configured as a brush, an angle under which a user U is operating the brush may be, for instance, evaluated too small or too large which may negatively affect the result of the brush. For instance, the result may not be as accurate as it could be when the magnetic moment vector $\vec{M}'$ would be arranged less inclined (or not inclined) at all relative to the longitudinal main body axis 116'.

The present disclosure provides a cost-efficient and simple solution to improve the accuracy by providing an improved magnetic object, i.e. the permanent magnet assembly. The solution is to provide a permanent magnet assembly 110 which comprises at least two sub-magnets 110a, 110b, 110c as outlined above with general reference to **Figs. 3 to 10.** Even if the sub-magnets 110a, 110b, 110c may inhibit a large angular deviation such as the standard magnet object mentioned above, a resulting angular deviation of the permanent magnet assembly 110 can be approaching zero, e.g. equal to or lower than 0.5°, or can be at least reduced. The figures show three example arrangements of the permanent magnet assembly 110 according to the present disclosure.

**Figs. 3a, 3b, 4a, 4b, and 5a to 5d** very schematically illustrate a first example arrangement of the permanent magnet assembly 110 which comprises two sub-magnets 110a, 110b including a first sub-magnet 110a and a second sub-magnet 110b.

With reference to **Figs. 3a and 3b,** the first sub-magnet 110a has a magnet body 114a (may also be referred to as the first magnet body 114a). The first magnet body 114a defines a longitudinal axis 116a of the first sub-magnet 110a (may also be referred to as the first longitudinal axis 116a). The first sub-magnet 110a creates a magnetic field and has a magnetic moment vector $\vec{M_1}$ associated to the first sub-magnet 110a (may also be referred to as the first magnetic moment vector $\vec{M_1}$).

With reference to **Figs. 4a and 4b,** the second sub-magnet 110b has a magnet body 114b (may also be referred to as the second magnet body 114b). The second magnet body 114b defines a longitudinal axis 116b of the second sub-magnet 110b (may also be referred to as the second longitudinal axis 116b). The second sub-magnet 110b creates a magnetic field and has a magnetic moment vector $\vec{M_2}$ associated to the second sub-magnet 110b (may also be referred to as the second magnetic moment vector $\vec{M_2}$).

In the illustrated first example arrangement, the first and the second magnetic moment vectors $\vec{M_1}, \vec{M_2}$ are inclined relative to the respective longitudinal axis 116a, 116b. The first magnetic moment vector $\vec{M_1}$ is inclined relative to the first longitudinal axis 116a (see, Fig. 3a). The second magnetic moment vector $\vec{M_2}$ is inclined relative to the second longitudinal axis 116b (see, Fig. 4a). Specifically, the first magnetic moment vector $\vec{M_1}$ may be inclined relative to the first longitudinal axis 116a by an angular deviation $\varphi_1$ (may also be referred to as first angular deviation $\varphi_1$). Specifically, the second magnetic moment vector $\vec{M_2}$ may be inclined relative to the second longitudinal axis 116b by an angular deviation $\varphi_2$ (may also be referred to as second angular deviation $\varphi_2$). Al-

though in the present example, the first angular deviation $\varphi_1$ and the second angular deviation $\varphi_2$ may be the same, in other embodiments, the angular deviations of the sub-magnets 110a, 110b, 110c may be different. In some embodiments, only one of the magnetic moment vectors $\vec{M_1}, \vec{M_2}$ may be inclined relative to the respective longitudinal axis 116a, 116b.

With further reference to **Figs. 3a and 4a,** each magnetic moment vector $\vec{M_1}, \vec{M_2}$ may be defined by a longitudinal vector component $\vec{M_{L1}}, \vec{M_{L2}}$ extending along the respective longitudinal axis 116a, 116b and a transversal vector component $\vec{M_{T1}}, \vec{M_{T2}}$ extending orthogonally to the respective longitudinal axis 116a, 116b. As in the present example, the magnetic strengths of the first sub-magnet 110a and the second sub-magnet 110b are the same and the angular deviations $\varphi_1$, $\varphi_2$ are also the same, the respective longitudinal vector components $\vec{M_{L1}}, \vec{M_{L2}}$ are the same and the respective transversal vector components $\vec{M_{T1}}, \vec{M_{T2}}$ are also the same. In other embodiments, the angular deviations $\varphi_1$, $\varphi_2$ of the first sub-magnet 110a and the second sub-magnet 110b may be different and/or the magnetic strengths of the first sub-magnet 110a and the second sub-magnet 110b may be different.

Generally, the combination of the longitudinal vector components $\vec{M_{L1}}, \vec{M_{L2}}, \vec{M_{L3}}$ may define a resulting longitudinal vector component $\vec{M_L}$ of the assembly magnetic moment vector $\vec{M}$. The combination of the transversal vector components $\vec{M_{T1}}, \vec{M_{T2}}, \vec{M_{T3}}$ may define a resulting transversal vector component $\vec{M_T}$ of the assembly magnetic moment vector $\vec{M}$.

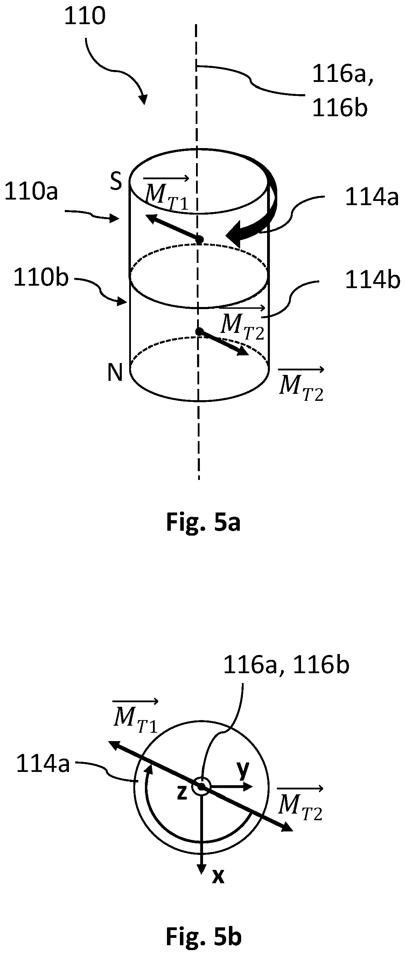

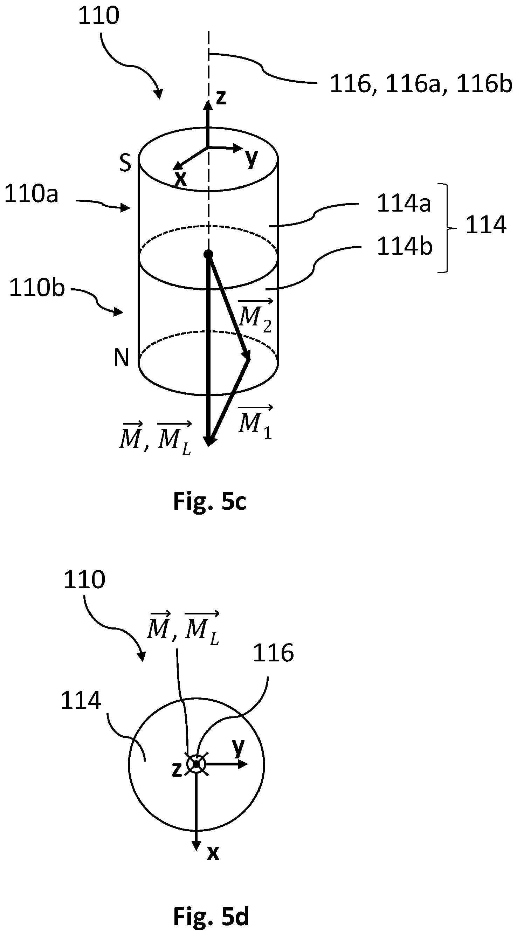

Thereby, a permanent magnet assembly 110 can be provided wherein the respective transversal vector components $\vec{M_{T1}}, \vec{M_{T2}}$ can equilibrate each other. More specifically and with respect to Figs. 5a to 5d, the first sub-magnet 110a and the second sub-magnet 110b are attached together to form the main body 114 of the permanent magnet assembly 110 having the main body longitudinal axis 116 and defining the assembly magnetic moment vector $\vec{M}$. As best seen in Figs. 5a and 5b, the first sub-magnet 110a and the second sub-magnet 110b are arranged coaxial to each other. Thereby the respective longitudinal axes 116a, 116b coincide and define the main body longitudinal axis 116. The first sub-magnet 110a and the second sub-magnet 110b are rotationally oriented relative to each other such that the assembly magnetic moment vector $\vec{M}$ is less inclined relative to the main body longitudinal axis 116 than a weighted average inclincation of the first and the second magnetic moment vectors $\vec{M_1}, \vec{M_2}$. In the present example the assembly magnetic moment vector $\vec{M}$ is not only less inclined but not inclined at all relative to the main body longitudinal axis 116. In other words, the assembly magnetic moment vector $\vec{M}$ coincides with the main body longitudinal axis 116. Further alternative described a resulting angular deviation $\varphi$ of the permanent magnet assembly which is a measure for the inclination of the assembly magnetic moment vector $\vec{M}$ relative to the main body longitudinal axis 116 may be zero or almost zero (see, **Figs. 5c and 5d).** This is possible in the present example because the transversal vector component $\overrightarrow{M_{T1}},\overrightarrow{M_{T2}}$ can cancel each other out when the sub-magnets 110a, 110b are rotationally arranged relative to each other appropriately to minimize the resulting transversal vector component $\overrightarrow{M_T}$. Specifically, the first sub-magnet 110a and the second sub-magnet 110b may be rotationally oriented relative to each other such that the respective transversal vector components $\overrightarrow{M_{T1}},\overrightarrow{M_{T2}}$ are oriented in opposing directions (see, **Figs. 5a and 5b).**

In other embodiments, the respective transversal vector components $\overrightarrow{M_{T1}},\overrightarrow{M_{T2}}$ may not necessarily be oriented in exactly opposing directions as shown in Fig. 5b. Also embodiments, in which the sub-magnets 110a, 110b are rotationally arranged relative to each other such that the respective transversal vector components $\overrightarrow{M_{T1}},\overrightarrow{M_{T2}}$ are inclined to each other advantageously reduces the resulting transversal vector component $\overrightarrow{M_T}$. In other words, the at least two sub-magnets 110a, 110b, 110c may be rotationally oriented relative to each other such that the combination of the respective transversal vector components $\overrightarrow{M_{T1}},\overrightarrow{M_{T2}},\overrightarrow{M_{T3}}$ lead to a reduced, specifically minimized, resulting transversal vector component $\overrightarrow{M_T}$.

In embodiments, the first sub-magnet 110a and the second sub-magnet 110b may be arranged coaxial to each other such that the longitudinal vector components $\overrightarrow{M_{L1}},\overrightarrow{M_{L2}}$ are oriented in the same direction. Specifically, the first sub-magnet 110a and the second sub-magnet 110b may be arranged coaxial to each other such that the longitudinal vector component $\overrightarrow{M_{L1}},\overrightarrow{M_{L2}}$ are oriented in the same direction and passing by the center of mass (will be explained further below) of each sub-magnet 110a, 110b. This may allow the use magnetic attracting force to attach and/or hold the sub-magnets 110a, 110b together. Specifically, surfaces (may be referred to as contacting surfaces) of the magnet bodies 114a, 114b to which the respective longitudinal axis 116a, 116b is orthogonally may be attached and/or held together, specifically may be brought into contact. In some embodiments form locking features, e.g. ribs and/or notches, may be provided on the contacting surfaces of the sub-magnets 110a, 110b which may engage and hold the sub-magnets 110a, 110b in a rotationally fixed position with respect to each other.

In some embodiments, the two sub-magnets 110a, 110b may be glued together. Specifically, the contacting surfaces may be glued together. In embodiments, the sub-magnets 110a, 110b may be coated and/or over molded. Specifically, permanent magnet assembly 110 may be coated and/or over molded to provide further holding force for the sub-magnets 110a, 110b. Other adhesive and/or cohesive joining connections may be possible. In some embodiments, the sub-magnets 110a, 110b may be attached together by an external holding structure. In examples, the external holding structure may comprise a resin molded over the permanent magnet assembly 110 and/or a cage like holder and/or a structure in the user-borne device 100 into which the permanent magnet assembly 110 is placed and/or fixed.

Generally, the term "sub-magnet" may refer to a magnetic object which may comprise components made of magnetic material, i.e., a material that has magnetic properties measurable by a plurality of magnetometers 300. The sub-magnets 110a, 110b, 110c of the permanent magnet assembly 110 may be permanent magnets, such as magnets comprising ferrite and/or neodymium. In embodiments, the sub-magnets 110a, 110b, 110c may be configured to generate a non-zero magnetic field. In embodiments, the sub-magnets 110a, 110b, 110c may comprise a paramagnetic or diamagnetic material. The term sub-magnet indicates that the sub-magnet as such may not have the magnetic strength which is desired or required for the application but that it forms part of a functionally discrete permanent magnet assembly 110 and provides a portion of the desired or required magnetic strength. Specifically, the combined magnetic strength of all sub-magnets 110a, 110b, 110c comprised in the permanent magnet assembly 110 conjoinedly form the desired or required magnetic strength. For instance, in comparison to the single standard magnetic object 110' of **Figs. 2a and 2b** having a desired or required magnetic strength, the single standard magnetic object 110' may be split into two sub-magnets 110a, 110b which may be used for forming the permanent magnet assembly 110 as shown in **Figs. 3a, 3b, 4a, 4b, and 5a to 5d.** The two sub-magnets 110a, 110b may each be half the size of the single standard magnetic object 110' and may each have half of the desired or required magnetic strength.

In embodiments, the sub-magnets 110a, 110b, 110c may have the same size and/or same magnetic strength. However, in embodiments at least two or all sub-magnets 110a, 110b, 110c may have different sizes and/or different magnetic strengths. Specifically, all or at least several sub-magnets 110a, 110b, 110c may have the same length along the longitudinal axis 116a, 116b, 116c. In some embodiments, at least one sub-magnet 110a, 110b, 110c may have a different length along the longitudinal axis 116a, 116b, 116c than the other sub-magnets 110a, 110b, 110c. In some embodiments, each of the at least two sub-magnets 110a, 110b, 110c may have different lengths along the longitudinal axis 116a, 116b, 116c.

In embodiments, the sub-magnet 110a, 110b, 110c may comprise a ferromagnetic material or a ferrimagnetic material. As set out above, the sub-magnet 110a, 110b, 110c may comprise a magnet body 114a, 114b, 114c extending along a longitudinal axis 116a, 116b, 116c. More specifically, the sub-magnet 110a, 110b, 110c may comprise a length measured along longitudinal axis 116a, 116b, 116c (e.g. along z-axis), a width (e.g. along y-axis) and a thickness (e.g. along x-axis) measured orthogonal with respect to the longitudinal axis 116a, 116b, 116c. In some embodiments, the length of a sub-magnet 110a, 110b, 110c may be larger than the width and/or the thickness. However, in other embodiments, the length of a sub-magnet 110a, 110b, 110c may be smaller than the width and/or the thickness.

In embodiments, the magnet body 114a, 114b, 114c may have a cylindrical shape whereby the longitudinal axis 116a, 116b, 116c is defined as the axis, e.g. height, of the cylinder (see, **Figs. 3 to 10).** In embodiments, the magnet body 114a, 114b, 114c of the sub-magnet 110a, 110b, 110c may not be longitudinal. For instance, the length measure along the longitudinal axis 116a, 116b, 116c may be shorter than the width and/or the thickness. In such cases, the magnet body 114a, 114b, 114c may still have a cylindrical shape whereby the longitudinal axis 116a, 116b, 116c may define the axis, e.g. height, of the cylinder. In embodiments, one or more of sub-magnet 110a, 110b, 110c may have a non cylindrical magnet body 114a, 114b, 114c. In some embodiments, at least one or several or all magnet bodies 114a, 114b, 114c may have an annular shape, e.g. a ring shape.

The above explanations regarding the sizes and geometries of the sub-magnets 110a, 110b, 110c may analogously apply to the permanent magnet assembly 110, specifically its main body 114 which also may have a length, a width and a thickness. In embodiments, the main body 114 of the permanent magnet assembly 110 may have a cylindrical shape or an annular shape.

According to the magnetization direction, the sub-magnet 110a, 110b, 110c may create an associated magnetic field. This is schematically illustrated by south pole "S" and north pole "N". Specifically, the sub-magnet 110a, 110b, 110c may be configured to create a symmetric magnetic field. More specifically, the sub-magnet 110a, 110b, 110c may be configured to create a rotationally symmetric magnetic field. As mentioned above, the magnetization may not be perfectly aligned with the respective longitudinal axis 116a, 116b, 116c. However, in embodiments, the permanent magnet assembly 110 may also comprise one or more sub-magnets wherein the magnetization coincides with the respective longitudinal axis 116a, 116b, 116c.

The magnetic moment vector $\vec{M_1}, \vec{M_2}, \vec{M_3}, \vec{M}$ is indicative of magnetic strength and/or the magnetization direction. The sub-magnets 110a, 110b, 110c and/or the permanent magnet assembly 110 may be approximated by a magnetic dipole. The approximation of the sub-magnets 110a, 110b, 110c and/or the permanent magnet assembly 110 by a magnetic dipole may particularly be suited when the sub-magnets 110a, 110b, 110c and/or the permanent magnet assembly 110 is distanced form the plurality of magnetometers 300 by a distance larger than a largest dimension of the sub-magnets 110a, 110b, 110c and/or the permanent magnet assembly 110, particularly larger than a multiple (e.g. at least four times) of the largest dimension of the sub-magnets 110a, 110b, 110c and/or the permanent magnet assembly 110. Particularly, when the sub-magnets 110a, 110b, 110c are attached together, the resulting permanent magnet assembly 110, specifically the magnetic field created by it, may be approximated by magnetic dipole. The sub-magnets 110a, 110b, 110c may comprise a center of magnetic dipole. The permanent magnet assembly 110 may comprise a center of magnetic dipole. The center of magnetic dipole may coincide with a center of mass of the respective sub-magnets 110a, 110b, 110c and/or the permanent magnet assembly 110, respectively. The respective magnetic moment vector $\vec{M_1}, \vec{M_2}, \vec{M_3}, \vec{M}$ may pass through the center of mass of the respective sub-magnets 110a, 110b, 110c and/or the permanent magnet assembly 110, respectively. In embodiments, an amperian model (also referred to as amperian-current model) may be used to approximate the sub-magnets 110a, 110b, 110c and/or the permanent magnet assembly 110.

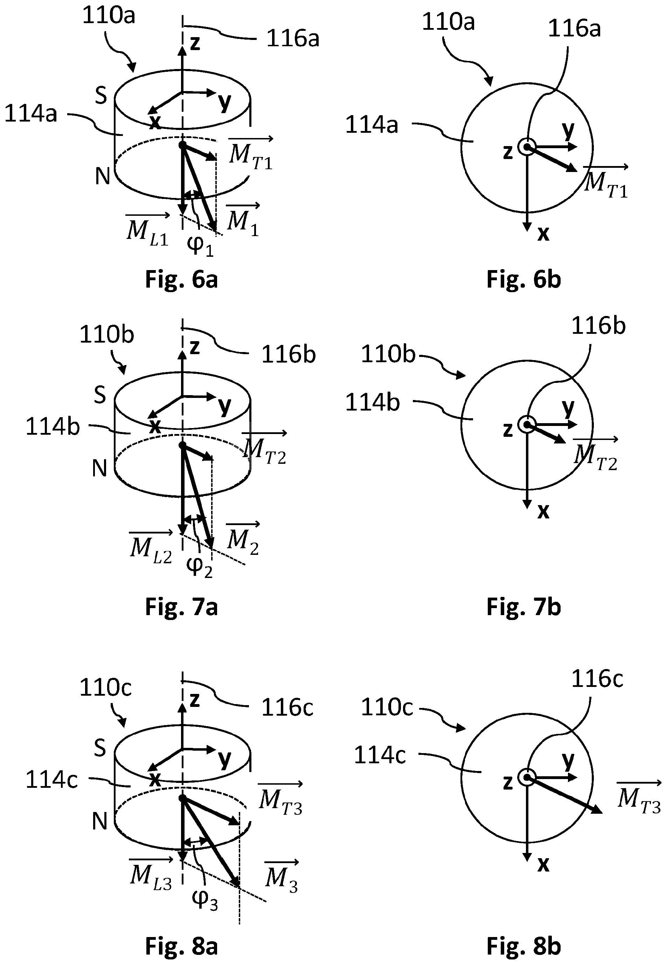

**Figs. 6a, 6b, 7a, 7b, 8a, 8b, and 9a to 9c** very schematically illustrate a second example arrangement of the permanent magnet assembly 110 which comprises three sub-magnets 110a, 110b including a first sub-magnet 110a, a second sub-magnet 110b and a third sub-magnet.

With reference to **Figs. 6a and 6b,** the first sub-magnet 110a has a magnet body 114a (may also be referred to as the first magnet body 114a). The first magnet body 114a defines a longitudinal axis 116a of the first sub-magnet 110a (may also be referred to as the first longitudinal axis 116a). The first sub-magnet 110a creates a magnetic field and has a magnetic moment vector $\vec{M_1}$ associated to the first sub-magnet 110a (may also be referred to as the first magnetic moment vector $\vec{M_1}$).

With reference to **Figs. 7a and 7b,** the second sub-magnet 110b has a magnet body 114b (may also be referred to as the second magnet body 114b). The second magnet body 114b defines a longitudinal axis 116b of the second sub-magnet 110b (may also be referred to as the second longitudinal axis 116b). The second sub-magnet 110b creates a magnetic field and has a magnetic moment vector $\vec{M_2}$ associated to the second sub-magnet 110b (may also be referred to as the second magnetic moment vector $\vec{M_2}$).

With reference to **Figs. 8a and 8b,** the third sub-magnet 110c has a magnet body 114c (may also be referred to as the third magnet body 114c). The third magnet body 114c defines a longitudinal axis 116c of the third sub-magnet 110c (may also be referred to as the third longitudinal axis 116c). The third sub-magnet 110c creates a magnetic field and has a magnetic moment vector $\vec{M_3}$ associated to the third sub-magnet 110c (may also be referred to as the third magnetic moment vector $\vec{M_3}$).

The main bodies 114a, 114b, 114c of the three sub-magnets 110a, 110b, 110c may have cylindrical shapes or may be alternatively shaped, similarly as described further above with respect to the second example arrangement.

In the illustrated second example arrangement, the first and the second magnetic moment vectors $\overrightarrow{M_1}, \overrightarrow{M_2}, \overrightarrow{M_3}$ are inclined relative to the respective longitudinal axis 116a, 116b, 116c. The first magnetic moment vector $\overrightarrow{M_1}$ is inclined relative to the first longitudinal axis 116a (see, Fig. 6a). The second magnetic moment vector $\overrightarrow{M_2}$ is inclined relative to the second longitudinal axis 116b (see, Fig. 7a). The third magnetic moment vector $\overrightarrow{M_3}$ is inclined relative to the third longitudinal axis 116c (see, Fig. 8a). Specifically, the first magnetic moment vector $\overrightarrow{M_1}$ may be inclined relative to the first longitudinal axis 116a by an angular deviation $\varphi_1$. Specifically, the second magnetic moment vector $\overrightarrow{M_2}$ may be inclined relative to the second longitudinal axis 116b by an angular deviation $\varphi_2$. Specifically, the third magnetic moment vector $\overrightarrow{M_3}$ may be inclined relative to the third longitudinal axis 116c by an angular deviation $\varphi_3$ (may also be referred to as third angular deviation $\varphi_3$). In comparison to the first example arrangement, in the second example arrangement, the first angular deviation $\varphi_1$, the second angular deviation $\varphi_2$, the third angular deviation $\varphi_3$ are different. In other embodiments, the angular deviations of some, specifically at least two, or all sub-magnets 110a, 110b, 110c may be the same.

Analogously to the first example arrangement, each magnetic moment vector $\overrightarrow{M_1}, \overrightarrow{M_2}, \overrightarrow{M_3}$ may be defined by a longitudinal vector component $\overrightarrow{M_{L1}}, \overrightarrow{M_{L2}}, \overrightarrow{M_{L3}}$ extending along the respective longitudinal axis 116a, 116b, 116c and a transversal vector component $\overrightarrow{M_{T1}}, \overrightarrow{M_{T2}}, \overrightarrow{M_{T3}}$ extending orthogonally to the respective longitudinal axis 116a, 116b, 116c. Exemplary in the second arrangement according to Figs. 6a, 6b, 7a, 7b, 8a, 8b, and 9a to 9c, the magnetic strengths of the first sub-magnet 110a, the second sub-magnet 110b and the third sub-magnet 110c may be different. In other embodiments, the magnetic strengths of two or more than two, specifically all, sub-magnets 110a, 110b, 110c may be the same. Generally, the combination of the longitudinal vector components $\overrightarrow{M_{L1}}, \overrightarrow{M_{L2}}, \overrightarrow{M_{L3}}$ may define a resulting longitudinal vector component $M_L$ of the assembly magnetic moment vector $\overrightarrow{M}$. The combination of the transversal vector components $\overrightarrow{M_{T1}}, \overrightarrow{M_{T2}}, \overrightarrow{M_{T3}}$ may define a resulting transversal vector component $\overrightarrow{M_T}$ of the assembly magnetic moment vector $\overrightarrow{M}$.

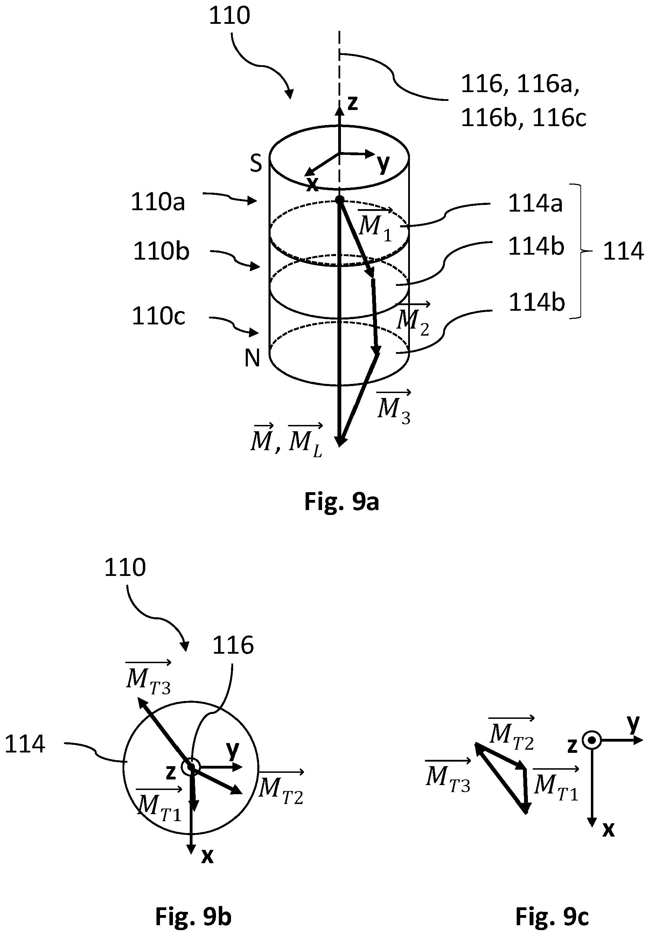

As best shown in Figs. 6b, 7b, 8b, 9b and 9c, the respective transversal vector components $\overrightarrow{M_{T1}}, \overrightarrow{M_{T2}}, \overrightarrow{M_{T3}}$ are different. Specifically, none of the transversal vector components $\overrightarrow{M_{T1}}, \overrightarrow{M_{T2}}, \overrightarrow{M_{T3}}$ is larger than the sum of the lengths of the two other transversal vector components $\overrightarrow{M_{T1}}, \overrightarrow{M_{T2}}, M_{T3}$. In the present second example, the third transversal vector component $\overrightarrow{M_{T3}}$ is larger

than the first transversal vector component $\overrightarrow{M_{T1}}$ and than second transversal vector component $\overrightarrow{M_{T2}}$. However, the third transversal vector component $\overrightarrow{M_{T3}}$ is smaller than the sum of the lengths of the first and the second vector components $\overrightarrow{M_{T1}}, \overrightarrow{M_{T2}}$. This enables to rotationally arrange the three sub-magnets 110a, 110b, 110c, specifically to rotationally orient the transversal vector components $\overrightarrow{M_{T1}}, \overrightarrow{M_{T2}}, \overrightarrow{M_{T3}}$ relative to each other, such that the resulting transversal vector component $\overrightarrow{M_T}$ of the assembly magnetic moment vector $\overrightarrow{M}$ is minimized. If the resulting transversal vector component $\overrightarrow{M_T}$ of the assembly magnetic moment vector $\overrightarrow{M}$ is minimized may depend on the assembly accuracy, at least the resulting transversal vector component $\overrightarrow{M_T}$ of the assembly magnetic moment vector $\overrightarrow{M}$ is reduced. In the example of Figs. 9a to 9c, the resulting transversal vector component $\overrightarrow{M_T}$ of the assembly magnetic moment vector $\overrightarrow{M}$ is minimized to zero.

Thereby, a permanent magnet assembly 110 can be provided wherein the respective transversal vector components $\overrightarrow{M_{T1}}, \overrightarrow{M_{T2}}, \overrightarrow{M_{T3}}$ can equilibrate each other. More specifically and with respect to Figs. 9a to 9c, the first sub-magnet 110a and the second sub-magnet 110b are attached together. The second sub-magnet 110b and the third sub-magnet 110c are attached together. In other words, the first sub-magnet 110a, the second sub-magnet 110b and the third sub-magnet 110c are arranged adjacent to each other and brought in contact. In the present example, the second sub-magnet 110b is arranged between the first and the third sub-magnet 110a, 110c. In other embodiments, the first or the third sub-magnet 110a, 110c may be arranged adjacent between the respective other sub-magnets. Thereby, the three sub-magnets 110a, 110b, 110c form the main body 114 of the permanent magnet assembly 110 having the main body longitudinal axis 116 and defining the assembly magnetic moment vector $\overrightarrow{M}$. As best seen in Fig. 9a, the first sub-magnet 110a, the second sub-magnet 110b and the third sub-magnet 110c are arranged coaxial to each other. Thereby the respective longitudinal axes 116a, 116b, 116c coincide and define the main body longitudinal axis 116. The first sub-magnet 110a, the second sub-magnet 110b and the third sub-magnet 110c are rotationally oriented relative to each other such that the assembly magnetic moment vector $\overrightarrow{M}$ is less inclined relative to the main body longitudinal axis 116 than a weighted average inclination of the first, the second and the third magnetic moment vectors $\overrightarrow{M_1}, \overrightarrow{M_2}, \overrightarrow{M_3}$. In the present example the assembly magnetic moment vector $\overrightarrow{M}$ is not only less inclined but not inclined at all relative to the main body longitudinal axis 116. In other words, the assembly magnetic moment vector $\overrightarrow{M}$ coincides with the main body longitudinal axis 116. Further alternative described a resulting angular deviation $\varphi$ of the permanent magnet assembly which is a measure for the inclination of the assembly magnetic moment vector $\overrightarrow{M}$ relative to the main body longitudinal axis 116 may be zero or almost zero (see, **Fig. 9a).** This is possible in the present example because the transversal vector component $\overrightarrow{M_{T1}},\overrightarrow{M_{T2}},\overrightarrow{M_{T3}}$ can cancel each other out when the sub-magnets 110a, 110b, 110c are rotationally arranged relative to each other appropriately to minimize the resulting transversal vector component $\overrightarrow{M_T}$. This may also be possible with more than three sub-magnets when none of the transversal vector components of the sub-magnets is larger than the sum of the lengths of the other transversal vector components. In examples, the permanent magnet assembly 110 may comprise at least four sub-magnets, whereby one of the sub-magnets has a magnetic moment vector $M_i$ which is not inclined relative to the respective longitudinal axis and the angular deviation $\varphi_i$ is zero. In other examples all four magnetic moment vectors may be inclined with respect to the respective main body longitudinal axis.

The three or more sub-magnets 110a, 110b, 110c of the second example arrangement may be attached together similarly as described with respect to the first example arrangement. For instance, the three (or more) sub-magnets 110a, 110b, 110c may be arranged coaxial to each other such that the longitudinal vector components $\overrightarrow{M_{L1}},\overrightarrow{M_{L2}},\overrightarrow{M_{L3}}$ are oriented in the same direction. Specifically, the first sub-magnet 110a, the second sub-magnet 110b and the third sub-magnet 110c may be arranged coaxial to each other such that the longitudinal vector component $\overrightarrow{M_{L1}},\overrightarrow{M_{L2}},\overrightarrow{M_{L3}}$ are oriented in the same direction and passing by the center of mass of each sub-magnet 110a, 110b, 100c. This may allow the use magnetic attracting force to attach and/or hold the sub-magnets 110a, 110b, 100c together. Specifically, adjacent surfaces (may be referred to as contacting surfaces) of the magnet bodies 114a, 114b, 114c to which the respective longitudinal axis 116a, 116b, 116c is orthogonally may be attached and/or held together, specifically may be brought into contact. In some embodiments, form locking features, e.g. ribs and/or notches, may be provided on the contacting surfaces of the sub-magnets 110a, 110b, 110c which may engage and hold the sub-magnets 110a, 110b in a rotationally fixed position with respect to each other.

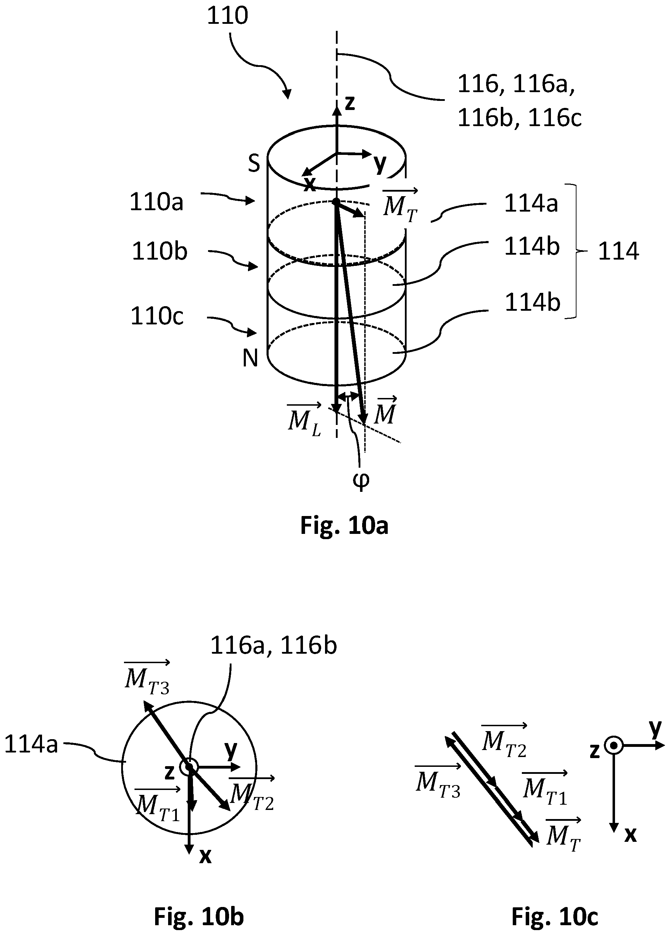

**Figs. 10a to 10c** very schematically illustrate a third example arrangement of the permanent magnet assembly 110 which comprises three sub-magnets 110a, 110b including a first sub-magnet 110a, a second sub-magnet 110b and a third sub-magnet. One or more features of the third example arrangement may be similar to the second example arrangement. The difference of this third example arrangement in comparison to the second example arrangement is that one of the transversal vector components $\overrightarrow{M_{T1}},\overrightarrow{M_{T2}},\overrightarrow{M_{T3}}$ is larger than the sum of the lengths of the other transversal vector components $\overrightarrow{M_{T1}},\overrightarrow{M_{T2}},\overrightarrow{M_{T3}}$.

In the present example, the third transversal vector component $\overrightarrow{M_{T3}}$ of the third sub-magnet 110c is larger than the sum of the lengths of the first and second transversal vector components $\overrightarrow{M_{T1}},\overrightarrow{M_{T2}}$. In other embodiments, the first transversal vector component $\overrightarrow{M_{T1}}$ may be larger than sum of the lengths of the third and second transversal vector components $\overrightarrow{M_{T3}},\overrightarrow{M_{T2}}$. In embodiments, the second transversal vector component $\overrightarrow{M_{T2}}$ may be larger than sum of the lengths of the first and third transversal vector components $\overrightarrow{M_{T1}},\overrightarrow{M_{T3}}$. Back with reference to Figs. 10b and 10c, the first and second transversal vector components $\overrightarrow{M_{T1}},\overrightarrow{M_{T2}}$ may be arranged in an opposing direction to the third transversal vector component $\overrightarrow{M_{T3}}$ that is larger. In other words, the other transversal vector components $\overrightarrow{M_{T1}},\overrightarrow{M_{T2}},\overrightarrow{M_{T3}}$ are arranged in an opposing direction to the one of the transversal vector components $\overrightarrow{M_{T1}},\overrightarrow{M_{T2}},\overrightarrow{M_{T3}}$ that is larger than the sum of the lengths of the other transversal vector components $\overrightarrow{M_{T1}},\overrightarrow{M_{T2}},\overrightarrow{M_{T3}}$. Alternatively described, the three sub-magnets 110a, 110b, 110c may be rotationally arranged, specifically the transversal vector components $\overrightarrow{M_{T1}},\overrightarrow{M_{T2}},\overrightarrow{M_{T3}}$ may be rotationally oriented relative to each other, such that the resulting transversal vector component $\overrightarrow{M_T}$ of the assembly magnetic moment vector $\vec{M}$ is minimized.

Specifically, the three sub-magnets 110a, 110b, 110c may be arranged coaxial to each other and may be rotationally oriented relative to each other such that the assembly magnetic moment vector $\vec{M}$ is less or equally inclined relative to the main body longitudinal axis 116 than a weighted average inclination of the magnetic moment vectors $\overrightarrow{M_1},\overrightarrow{M_2},\overrightarrow{M_3}$ of the at least two sub-magnets 110a, 110b, 110c.

More specifically and with respect to Figs. 10a, 10b, 10c, the first sub-magnet 110a and the second sub-magnet 110b are attached together. The second sub-magnet 110b and the third sub-magnet 110c are attached together. In other words, the first sub-magnet 110a, the second sub-magnet 110b and the third sub-magnet 110c are arranged adjacent to each other and brought in contact. In the present example, the second sub-magnet 110b is arranged between the first and the third sub-magnet 110a, 110c. In other embodiments, the first or the third sub-magnet 110a, 110c may be arranged adjacent and between the respective other sub-magnets. Thereby, the three sub-magnets 110a, 110b, 110c form the main body 114 of the permanent magnet assembly 110 having the main body longitudinal axis 116 and defining the assembly magnetic moment vector $\vec{M}$. As best seen in Fig. 10a, the first sub-magnet 110a, the second sub-magnet 110b and the third sub-magnet 110c are arranged coaxial to each other. Thereby the respective longitudinal axes 116a, 116b, 116c coincide and define the main body longitudinal axis 116. The first sub-magnet 110a, the second sub-magnet 110b and the third sub-magnet 110c are rotationally oriented relative to each other such that the assembly magnetic moment vector $\vec{M}$ is less inclined relative to the main body longitudinal axis 116 than a weighted average inclincation of the first, the second and the third magnetic moment vectors $\overrightarrow{M_1}, \overrightarrow{M_2}, \overrightarrow{M_3}$. In the present example the assembly magnetic moment vector $\vec{M}$ is inclined by the resulting angular deviation φ relative to the main body longitudinal axis 116. This is possible in the present example because the third transversal vector component $\overrightarrow{M_{T3}}$ can be reduced by the sum of the lengths of the first and second transversal vector components $\overrightarrow{M_{T1}}, \overrightarrow{M_{T2}}$ when the sub-magnets 110a, 110b, 110c are rotationally arranged relative to each other appropriately to minimize the resulting transversal vector component $\overrightarrow{M_T}$. This may also be possible with more than three sub-magnets when one of the transversal vector components of the sub-magnets is larger than the sum of the lengths of the other transversal vector components. In examples, the permanent magnet assembly may comprise at least four sub-magnets, whereby one of the sub-magnet has a magnetic moment vector which is not inclined relative to the respective longitudinal axis and the angular deviation φ is zero.

It should be understood that one, several or all of the above features explained with respect to a specific arrangement may be combined with any other arrangement of the permanent magnet assembly 110. It should further be understood the user-borne device 100 according to the second aspect of the present disclosure may comprise two or more permanent magnet assemblies 110 which may be configured similarly or differently. In embodiments, the user-borne device 100 may comprise in addition to the at least one permanent magnet assembly 110, at least one single magnetic object 110' which is not part of the permanent magnet assembly 110.

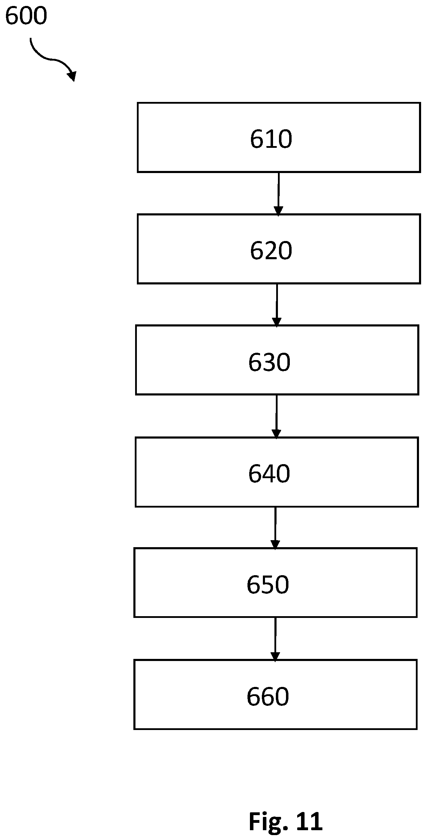

With reference to **Fig. 11,** a method 600 for manufacturing a permanent magnet assembly 110 with a desired predetermined magnetic strength is provided according to the fourth aspect of the present disclosure. The method 600 may be specifically configured for manufacturing the permanent magnet assembly 110 as previously described herein. The method 600 comprises providing 610 a first sub-magnet 110a and at least a second sub-magnet 110b, 110c. Each of the first sub-magnet 110a and the second sub-magnet 110b, 110c have a magnet body 114a, 114b, 114c defining a respective longitudinal axis 116a, 116b, 116c. The method further comprises putting 630 the first sub-magnet 110a and the second sub-magnet 110b, 110c coaxially together to form a main body 114 of the permanent magnet assembly 110. The first sub-magnet 110a and the second sub-magnet 110b, 110c are put together such that the respective longitudinal axes 116a, 116b, 116c coincide and define a main body longitudinal axis 116. The method further includes evaluating 640 an assembly magnetic moment vector $\vec{M}$ resulting from the magnetic field created conjoinedly by the first sub-magnet 110a and the second sub-magnet 110b, 110c by means of a processing unit 400. Additionally, the method includes rotationally arranging 650 the first sub-magnet 110a relative to the second sub-magnet 110b, 110c about the respective longitudinal axis 116a, 116b, 116c such that an inclination of the assembly magnetic moment vector $\vec{M}$ with respect to the main body longitudinal axis 116 is minimal. Specifically, the method 600 may include using a plurality of magnetometers 300 to measure the magnetic field created by the sub-magnets 110a, 110b, 110c and/or the permanent magnet assembly 110. The method 600 may provide a permanent magnet assembly 110 which is more cost efficient and/or possesses a resulting magnetic moment vector $\vec{M}$ which is more aligned to the main body longitudinal axis 116 in comparison to a magnetic object 110' which does not comprise at least two sub-magnets (see, e.g. Figs. 2a and 2b). Thereby the method 600 may result in a permanent magnet assembly 110 whose location can be determined and/or tracked with improved accuracy. Specifically, a system comprising one or more features of the system 10 according to the third aspect as described herein above may be used in combination with the method 600.

In embodiments, the method may further comprise fixating 660 the first sub-magnet 110a and the second sub-magnet 110b, 110c in a rotationally arranged position in which the inclination of the assembly magnetic moment vector $\vec{M}$ with respect to the main body longitudinal axis 116 is minimal. In embodiments, fixating 660 may comprise adhesively and/or cohesively joining the first sub-magnet 110a and the second sub-magnet 110b, 110c. In embodiments, fixating 660 may comprise using magnetic attracting force to attach and/or hold the sub-magnets 1 10a, 110b, 100c together. For instance, the at least two sub-magnets 110a, 110b, 110c may be arranged coaxial to each other such that the longitudinal vector components $\overrightarrow{M_{L1}}, \overrightarrow{M_{L2}}, \overrightarrow{M_{L3}}$ are oriented in the same direction. Specifically, the first sub-magnet 110a and the second sub-magnet 110b, 110c may be arranged coaxial to each other such that the longitudinal vector component $\overrightarrow{M_{L1}}, \overrightarrow{M_{L2}}, \overrightarrow{M_{L3}}$ are oriented in the same direction and passing by the center of mass of each sub-magnet 110a, 110b, 100c. More specifically, adjacent surfaces (may be referred to as contacting surfaces) of the magnet bodies 114a, 114b, 114c to which the respective longitudinal axis 116a, 116b, 116c is orthogonally may be attached and/or held together, specifically may be brought into contact. In some embodiments, fixating 660 may comprise providing form locking features, e.g. ribs and/or notches, on the contacting surfaces of the sub-magnets 110a, 110b, 110c which may engage and hold the sub-magnets 110a, 110b in a rotationally fixed position with respect to each other.

In embodiments, a first sub-magnet 110a and at least a second sub-magnet 110b, 110c may be provided which in combination result in the desired predetermined magnetic strength of the permanent magnet assembly 110. Specifically, a first sub-magnet 110a and at least a second sub-magnet 110b, 110c may be provided which in addition result in the desired predetermined magnetic strength. More specifically, an addition of the respective longitudinal vector components $\overrightarrow{M_{L1}}, \overrightarrow{M_{L2}}, \overrightarrow{M_{L3}}$ of the first sub-magnet 110a and the at least second sub-magnet 110b, 110c may result in the desired predetermined magnetic strength of the permanent magnet assembly 110.

In embodiments, evaluating 640 the assembly magnetic moment vector $\vec{M}$ may comprise measuring by a plurality of magnetometers 300 the resulting magnetic field created conjoinedly by the sub-magnets 110a, 110b, 110c. Specifically, evaluating 640 the assembly magnetic moment vector $\vec{M}$ may further comprise evaluating by means of a processing unit 400 the magnetic assembly magnetic moment vector $\vec{M}$ based on the measured magnetic field.

In embodiments, evaluating 640 the assembly magnetic moment vector $\vec{M}$ may further comprise evaluating an angular deviation $\varphi$ of the assembly magnetic moment vector $\vec{M}$ relative to the main body longitudinal axis 116 by means of the processing unit 400. In embodiments, the method may comprise obtaining location data indicative of the main body longitudinal axis 116. The location data may be compared with location data of the determined assembly magnetic moment vector $\vec{M}$ to determine the resulting angular deviation $\varphi$. In embodiments location data indicative of the main body longitudinal axis 116 may be detected by a system similar to the system 10 described hereinabove and at least comprising the processing unit 400 and the plurality of magnetometers 300. In some embodiments, the location data indicative of the main body longitudinal axis 116 may be known from the system. In examples, the sub-magnets may be placed in a holder in a known position and orientation, specifically in a known longitudinal axis orientation, specifically known to the system.

In embodiments, evaluating 640 the assembly magnetic moment vector $\vec{M}$ may further comprise evaluating a transversal vector component $\overrightarrow{M_T}$ of the assembly magnetic moment vector $\vec{M}$ which is orthogonally to the main body longitudinal axis 116 by means of the processing unit 400. The first sub-magnet 110a may be rotationally arranged in a position about the respective longitudinal axis 116a, 116b, 116c relative to the second sub-magnet 110b, 110c in which the transversal vector component $\overrightarrow{M_T}$ of the assembly magnetic moment vector $\vec{M}$ is minimal.

In embodiments, putting 630 the sub-magnets 110a, 110b, 110c together may further comprise fixedly locating one of the first sub-magnet 110a and the second sub-magnet 110b, 110c at a known location. A known location may comprise a known position and/or orientation in a reference coordinate system, for instance the reference coordinate system XYZ of system 10 according to the third aspect. Specifically, one of the first sub-magnet 110a and the second sub-magnet 1 10b, 110c may be fixedly located at a known longitudinal axis orientation of the sub-magnet. In examples, the respective sub-magnet 110a, 110b, 110c which is fixedly located may be fixedly location in a holder configured to fixedly hold one of the sub-magnets 110a, 110b, 110c. In other words, a known location may be a location (i.e. position and/or orientation) known to the processing unit 400. In embodiments, the other of the first sub-magnet 110a and the second sub-magnet 110b, 110c may be rotationally arranged 650 about the respective longitudinal axis 116a, 116b, 116c to minimize the inclination of the assembly magnetic moment vector $\vec{M}$ with respect to the main body longitudinal axis 116.

In embodiments, evaluating 640 the assembly magnetic moment vector $\vec{M}$ may comprise evaluating a respective magnetic moment vector $\overrightarrow{M_1}, \overrightarrow{M_2}, \overrightarrow{M_3}$ of the first sub-magnet 110a and of the second sub-magnet 110b, 110c by means of a plurality of magnetometers 300. Specifically, this step may be performed when the sub-magnets 110a, 110b, 110c are distanced from each other by a minimum distance. The respective magnetic field created separately by the respective sub-magnet may be measured separately by means of the plurality of magnetometers 300. For instance, this may be performed by measuring the magnetic fields subsequently. Alternatively, this may be performed by sufficiently distancing the sub-magnets 110a, 110b, 110c within the measuring volume M and measuring at the same time. In embodiments, evaluating 640 a respective magnetic moment vector $\overrightarrow{M_1}, \overrightarrow{M_2}, \overrightarrow{M_3}$ may comprise evaluating a transversal vector component $\overrightarrow{M_{T1}}, \overrightarrow{M_{T2}}, \overrightarrow{M_{T3}}$ extending orthogonally to the respective longitudinal axis 116a, 116b, 116c of the respective sub-magnet 110a, 110b, 110c. In embodiments, evaluating 640 the assembly magnetic moment vector $\vec{M}$ may comprise determining a rotational position of the first sub-magnet 110a about the respective longitudinal axis 116a, 116b, 116c relative to the second sub-magnet 110b, 110c in which the vector sum transversal vector component $\overrightarrow{M_{T1}}, \overrightarrow{M_{T2}}, \overrightarrow{M_{T3}}$ result in a minimized transversal vector component $\overrightarrow{M_T}$ of the assembly magnetic moment vector $\vec{M}$. In embodiments, the sub-magnets 110a, 110b, 110c may be rotationally arranged 650 relative to each other according to the determined rotational position and put together 630. In some embodiments, the sub-magnets 110a, 110b, 110c may be first be put together and then rotationally arranged or vice versa.

In embodiments, a first sub-magnet 110a and a second sub-magnet 110b and a third sub-magnet 110c may be provided which in combination result in the desired predetermined magnetic strength of the permanent magnet assembly 110. Specifically, the first sub-magnet 110a, the second sub-magnet 110b and the third sub-magnet 110c may result in addition in the desired predetermined magnetic strength of the permanent magnet assembly 110. More specifically, an addition of the respective longitudinal vector components $\overrightarrow{M_{L1}}, \overrightarrow{M_{L2}}, \overrightarrow{M_{L3}}$ of the first sub-magnet 110a, the second sub-magnet 110b, and the third sub-magnet 110c may result in the desired predetermined magnetic strength of the permanent magnet assembly 110.

In some embodiments with at least three sub-magnets 1 10a, 1 10b, 1 10c, if one of the transversal vector components $\overrightarrow{M_{T1}}, \overrightarrow{M_{T2}}, \overrightarrow{M_{T3}}$ is larger than the sum of the lengths of the other transversal vector components $\overrightarrow{M_{T1}}, \overrightarrow{M_{T2}}, \overrightarrow{M_{T3}}$, the other transversal vector components $\overrightarrow{M_{T1}}, \overrightarrow{M_{T2}}, \overrightarrow{M_{T3}}$ may be arranged in an opposing direction to the one of the transversal vector components $\overrightarrow{M_{T1}}, \overrightarrow{M_{T2}}, \overrightarrow{M_{T3}}$ that is larger. This method step may result in a permanent magnet assembly 110 according to the third example arrangement set out further above with respect to Figs. 10a to 10c.

In some embodiments with at least three sub-magnets 110a, 110b, 110c, if none of the transversal vector components $\overrightarrow{M_{T1}}, \overrightarrow{M_{T2}}, \overrightarrow{M_{T3}}$ is larger than the sum of the lengths of the other transversal vector components $\overrightarrow{M_{T1}}, \overrightarrow{M_{T2}}, \overrightarrow{M_{T3}}$, the transversal vector components $\overrightarrow{M_{T1}}, \overrightarrow{M_{T2}}, \overrightarrow{M_{T3}}$ may be arranged such that the resulting transversal vector component $\overrightarrow{M_T}$ of the assembly magnetic moment vector $\overrightarrow{M}$ is minimized.

In embodiments, more than three sub-magnets 110a, 110b, 110c may be used analogously to any one of the previous method steps may be used analogously to any one of the previous method steps.

Although the present invention has been described above and is defined in the attached claims, it should be understood that the invention may alternatively be defined in accordance with the following embodiments:

1. A permanent magnet assembly (110) for a user-borne device (100) comprising:

- at least two sub-magnets (110a, 110b, 110c) each having a magnet body (114a, 114b, 114c) defining a respective longitudinal axis (116a, 116b, 116c),
- wherein each sub-magnet (110a, 110b, 110c) creates a magnetic field and has a respective magnetic moment vector $(\overrightarrow{M_1}, \overrightarrow{M_2}, \overrightarrow{M_3})$ associated to the respective sub-magnet (110a, 110b, 110c), wherein at least one magnetic moment vector $(\overrightarrow{M_1}, \overrightarrow{M_2}, \overrightarrow{M_3})$ is inclined relative to the respective longitudinal axis (116a, 116b, 116c),
- wherein two adjacent sub-magnets (110a, 110b, 110c) of the at least two sub-magnets (110a, 110b, 110c) are attached together to form a main body (114) of the permanent magnet assembly (110) having a main body longitudinal axis (116) and defining an assembly magnetic moment vector $(\overrightarrow{M})$, and
- wherein the at least two sub-magnets (110a, 110b, 110c) are arranged coaxial to each other and are rotationally oriented relative to each other such that the assembly magnetic moment vector $(\overrightarrow{M})$ is less or equally inclined relative to the main body longitudinal axis (116) than a weighted average inclination of the magnetic moment vectors $(\overrightarrow{M_1}, \overrightarrow{M_2}, \overrightarrow{M_3})$ of the at least two sub-magnets (110a, 110b, 1 10c).

2. The permanent magnet assembly (110) of embodiment 1, wherein each magnetic moment vector $(\overrightarrow{M_1}, \overrightarrow{M_2}, \overrightarrow{M_3})$ is defined by a longitudinal vector component $(\overrightarrow{M_{L1}}, \overrightarrow{M_{L2}}, \overrightarrow{M_{L3}})$ extending along the respective longitudinal axis (116a, 116b, 116c) and a transversal vector component $(\overrightarrow{M_{T1}}, \overrightarrow{M_{T2}}, \overrightarrow{M_{T3}})$ extending orthogonally to the respective longitudinal axis (116a, 116b, 116c), wherein the combination of the longitudinal vector components $(\overrightarrow{M_{L1}}, \overrightarrow{M_{L2}}, \overrightarrow{M_{L3}})$ defines a resulting longitudinal vector component $(\overrightarrow{M_L})$ of the assembly magnetic moment vector $(\overrightarrow{M})$, and wherein the combination of the transversal vector components $(\overrightarrow{M_{T1}}, \overrightarrow{M_{T2}}, \overrightarrow{M_{T3}})$ defines a resulting transversal vector component $(\overrightarrow{M_T})$ of the assembly magnetic moment vector $(\overrightarrow{M})$.

3. The permanent magnet assembly (110) of embodiment 2, wherein the at least two sub-magnets (1 10a, 110b, 1 10c) are rotationally oriented relative to each other such that the combination of the respective transversal vector components $(\overrightarrow{M_{T1}}, \overrightarrow{M_{T2}}, \overrightarrow{M_{T3}})$ lead to a minimized resulting transversal vector component $(\overrightarrow{M_T})$.

4. The permanent magnet assembly (110) of any one of the preceding embodiments, wherein the at least two sub-magnets (110a, 110b, 110c) comprise a first sub-magnet (110a) and a second sub-magnet (110b) which are attached together.

5. The permanent magnet assembly (110) of embodiment 4, if at least dependent on embodiment 2, wherein the first sub-magnet (110a) and the second sub-magnet (110b) are rotationally oriented relative to each other such that the respective transversal vector components $(\overrightarrow{M_{T1}}, \overrightarrow{M_{T2}})$ are oriented in opposing directions.

6. The permanent magnet assembly (110) of any one of the preceding embodiments, if at least dependent on embodiments 2 and 4, wherein the first sub-magnet (110a) and the second sub-magnet (110b) are arranged coaxial to each other such that the longitudinal vector component $(\overrightarrow{M_{L1}}, \overrightarrow{M_{L2}})$ are oriented in the same direction.

7. The permanent magnet assembly (110) of any one of embodiments 4 to 6, wherein the at least two sub-magnets (110a, 110b, 110c) further comprise a third sub-magnet (110c) which is attached to one of the first or the second sub-magnet (110a, 1 10b).

8. The permanent magnet assembly (110) of embodiment 7, if at least dependent on embodiment 2, wherein if one of the transversal vector components $(\overrightarrow{M_{T1}},\overrightarrow{M_{T2}},\overrightarrow{M_{T3}})$ is larger than the sum of the lengths of the other transversal vector components $(\overrightarrow{M_{T1}},\overrightarrow{M_{T2}},\overrightarrow{M_{T3}})$, the other transversal vector components $(\overrightarrow{M_{T1}},\overrightarrow{M_{T2}},\overrightarrow{M_{T3}})$ are arranged in an opposing direction to the one of the transversal vector components $(\overrightarrow{M_{T1}},\overrightarrow{M_{T2}},\overrightarrow{M_{T3}})$ that is larger.

9. The permanent magnet assembly (110) of embodiment 7, if at least dependent on embodiment 2, wherein if none of the transversal vector components $(\overrightarrow{M_{T1}},\overrightarrow{M_{T2}},\overrightarrow{M_{T3}})$ is larger than the sum of the lengths of the other transversal vector components $(\overrightarrow{M_{T1}},\overrightarrow{M_{T2}},\overrightarrow{M_{T3}})$, the transversal vector components $(\overrightarrow{M_{T1}},\overrightarrow{M_{T2}},\overrightarrow{M_{T3}})$ are arranged such that the resulting transversal vector component $(\overrightarrow{M_T})$ of the assembly magnetic moment vector $(\overrightarrow{M})$ is minimized.

10. The permanent magnet assembly (110) of any one of the preceding embodiments, wherein each of the at least two sub-magnets (110a, 110b, 110c) is a permanent magnet.

11. The permanent magnet assembly (110) of any one of the preceding embodiments, wherein the magnet body (114a, 114b, 114c) has a cylindrical shape or an annular shape.

12. The permanent magnet assembly (110) of any one of the preceding embodiments, wherein the main body (114) of the permanent magnet assembly (110) has a cylindrical shape or an annular shape.

13. The permanent magnet assembly (110) of any one of the preceding embodiments, wherein two adjacent sub-magnets (110a, 110b, 110c) of the at least two sub-magnets (110a, 110b, 110c) are glued together.

14. The permanent magnet assembly (110) of any one of the preceding embodiments, wherein the at least two sub-magnets (1 10a, 1 10b, 1 10c) attached together by an external holding structure.

15. A user-borne device (100) operable in a sensing volume (M) created by a plurality of magnetometers (300), the user-borne device (100) comprising:

at least one permanent magnet assembly (110) of any one of the preceding embodiments, and a housing (101) in which the permanent magnet assembly (110) is arranged at a predetermined location.

16. The user-borne device (100) of embodiment 15, wherein the housing (101) defines a first device axis $(x_d)$, a second device axis $(y_d)$ orthogonal to the first device axis $(x_d)$, and a vertical device axis $(z_d)$ which is orthogonal to a plane defined by the first device axis $(x_d)$ and the second device axis $(y_d)$.

17. The user-borne device (100) of embodiment 16, wherein the main body longitudinal axis (116) is arranged orthogonally or parallelly to the vertical device axis $(z_d)$.

18. The user-borne device (100) of any one of embodiments 15 to 17, wherein the user-borne device (100) is a computer mouse, a keyboard, a toy, a stylus, brush or a dial.

19. The user-borne device (100) of any one of embodiments 15 to 18, wherein the user-borne device (100) is electrically and/or electronically passive.

20. A system (10) for determining a manipulation of a user-borne device (100) by a user (U), the system (10) comprising:

the user-borne device (100) according to any one of the preceding embodiments, and a plurality of magnetometers (300) configured to create a sensing volume and configured to measure a magnetic field associated with the at least one permanent magnet assembly (110), wherein the system (10) is configured to track movement and/or location of the at least one permanent magnet assembly (110) in at least five degrees of freedom.

21. The system (10) of embodiment 20, wherein the system (10) comprises a processing unit (400) configured to control a representation of the user-borne device (100) on an output device (500).

22. The system (10) of any one of embodiments 20 or 21, wherein the system (10) comprises an interaction support (200) having an interaction support surface, at least a partial surface of the interaction support surface defines an interaction surface (210) on which the user-borne device is operable (100).

23. The system (10) of embodiment 22, wherein the interaction support (200) is a wall, a furniture, a notebook, an electronics device, a screen or display, keyboard and/or a mouse pad.

24. The system (10) of any one of embodiments 20 to 23, wherein the plurality of magnetometers (300) is integrated in the interaction support (200), or wherein the plurality of magnetometers (300) is integrated in a wall, a furniture, a notebook, an electronics device, a screen or display, keyboard, a manufacturing stage, a manufacturing bench, a calibration stage and/or a mouse pad.

25. A method (600) for manufacturing a permanent magnet assembly (110) with a desired predetermined magnetic strength comprising:

- Providing (610) a first sub-magnet (110a) and at least a second sub-magnet (110b, 110c) each having a magnet body (114a, 114b, 114c) defining a respective longitudinal axis (116a, 116b, 116c);
- Putting (630) the first sub-magnet (110a) and the second sub-magnet (110b, 110c) coaxially together to form a main body (114) of the permanent magnet assembly (110) and such that the respective longitudinal axes (116a, 116b, 116c) coincide and define a main body longitudinal axis (116);
- Evaluating (640) an assembly magnetic moment vector ($\vec{M}$) resulting from the magnetic field created conjoinedly by the first sub-magnet (110a) and the second sub-magnet (110b, 110c) by means of a processing unit (400);
- Rotationally arranging (650) the first sub-magnet (110a) relative to the second sub-magnet (110b, 110c) about the respective longitudinal axis (116a, 116b, 116c) such that an inclination of the assembly magnetic moment vector ($\vec{M}$) with respect to the main body longitudinal axis (116) is minimal.

26. The method (600) of embodiment 25, further comprising:

- Fixating (660) the first sub-magnet (110a) and the second sub-magnet (110b, 110c) in a rotationally arranged position in which the inclination of the assembly magnetic moment vector ($\vec{M}$) with respect to the main body longitudinal axis (116) is minimal.

27. The method (600) of embodiment 26, wherein fixating (660) comprises adhesively and/or cohesively joining the first sub-magnet (110a) and the second sub-magnet (110b, 110c).

28. The method (600) of any one of embodiments 25 to 27, wherein a first sub-magnet (110a) and at least a second sub-magnet (110b, 110c) are provided which in combination, specifically in addition, result in the desired predetermined magnetic strength of the permanent magnet assembly (110).

29. The method (600) of any one of embodiments 25 to 28, wherein evaluating (640) the assembly magnetic moment vector ($\vec{M}$) comprises measuring by a plurality of magnetometers (300) the resulting magnetic field created conjoinedly by the sub-magnets (110a, 110b, 110c).

30. The method (600) of embodiment 29, wherein evaluating (640) the assembly magnetic moment vector ($\vec{M}$) further comprises evaluating by means of a processing unit (400) the magnetic assembly magnetic moment vector ($\vec{M}$) based on the measured magnetic field.

31. The method (600) of any one of embodiments 25 to 30, wherein evaluating (640) the assembly magnetic moment vector ($\vec{M}$) further comprises evaluating an angular deviation ($\varphi$) of the assembly magnetic moment vector ($\vec{M}$) relative to the main body longitudinal axis (116) by means of the processing unit (400).

32. The method (600) of any one of embodiments 25 to 31, wherein evaluating (640) the assembly magnetic moment vector ($\vec{M}$) further comprises evaluating a transversal vector component ($\vec{M_T}$) of the assembly magnetic moment vector ($\vec{M}$) which is orthogonally to the main body longitudinal axis (116) by means of the processing unit (400).

33. The method (600) of embodiment 32, wherein the first sub-magnet (110a) is rotationally arranged in a position about the respective longitudinal axis (116a, 116b, 116c) relative to the second sub-magnet (110b, 110c) in which the transversal vector component ($\vec{M_T}$) of the assembly magnetic moment vector ($\vec{M}$) is minimal.

34. The method (600) of any one of embodiments 25 to 33, wherein putting (630) the sub-magnets (110a, 110b, 110c) together comprises fixedly locating one of the first sub-magnet (110a) and the second sub-magnet (110b, 110c) at a known location.

35. The method (600) of embodiment 34, wherein the other of the first sub-magnet (110a) and the second sub-magnet (110b, 110c) is rotationally arranged (650) about the respective longitudinal axis (116a, 116b, 116c) to minimize the inclination of the assembly magnetic moment vector ($\vec{M}$) with respect to the main body longitudinal axis (116).

36. The method (600) of any one of embodiments 25 to 35, wherein evaluating (640) the assembly magnetic moment vector ($\vec{M}$) comprises evaluating a respective magnetic moment vector ($\vec{M_1}, \vec{M_2}, \vec{M_3}$) of the first sub-magnet (110a) and of the second sub-magnet (110b, 110c) by means of a plurality of magnetometers (300).

37. The method (600) of embodiment 36, wherein evaluating (640) a respective magnetic moment vector $(\vec{M_1}, \vec{M_2}, \vec{M_3})$ comprises evaluating a transversal vector component $(\vec{M_{T1}}, \vec{M_{T2}}, \vec{M_{T3}})$ extending orthogonally to the respective longitudinal axis (116a, 116b, 116c) of the respective sub-magnet (110a, 110b, 110c).

38. The method (600) of embodiment 37, wherein evaluating (640) the assembly magnetic moment vector $(\vec{M})$ further comprises determining a rotational position of the first sub-magnet (110a) about the respective longitudinal axis (116a, 116b, 116c) relative to the second sub-magnet (110b, 110c) in which the vector sum transversal vector component $(\vec{M_{T1}}, \vec{M_{T2}}, \vec{M_{T3}})$ result in a minimized transversal vector component $(\vec{M_T})$ of the assembly magnetic moment vector $(\vec{M})$.

39. The method (600) of embodiment 38, wherein the sub-magnets (110a, 110b, 110c) are rotationally arranged (650) relative to each other according to the determined rotational position and put together (630).

40. The method (600) of any one of embodiments 25 to 39, wherein a first sub-magnet (110a) and a second sub-magnet (110b) and a third sub-magnet (110c) are provided which in combination, specifically in addition, result in the desired predetermined magnetic strength of the permanent magnet assembly (110).

41. The method (600) of embodiment 40, if at least dependent on embodiment 37, wherein if one of the transversal vector components $(\vec{M_{T1}}, \vec{M_{T2}}, \vec{M_{T3}})$ is larger than the sum of the lengths of the other transversal vector components $(\vec{M_{T1}}, \vec{M_{T2}}, \vec{M_{T3}})$, the other transversal vector components $(\vec{M_{T1}}, \vec{M_{T2}}, \vec{M_{T3}})$ are arranged in an opposing direction to the one of the transversal vector components $(\vec{M_{T1}}, \vec{M_{T2}}, \vec{M_{T3}})$ that is larger.

42. The method (600) of any one of embodiments 40 or 41, if at least dependent on embodiment 37, wherein if none of the transversal vector components $(\vec{M_{T1}}, \vec{M_{T2}}, \vec{M_{T3}})$ is larger than the sum of the lengths of the other transversal vector components $(\vec{M_{T1}}, \vec{M_{T2}}, \vec{M_{T3}})$, the transversal vector components $(\vec{M_{T1}}, \vec{M_{T2}}, \vec{M_{T3}})$ are arranged such that the resulting transversal vector component $(\vec{M_T})$ of the assembly magnetic moment vector $(\vec{M})$ is minimized.

**Claims**

1. A permanent magnet assembly (110) for a user-borne device (100) comprising:

   - at least two sub-magnets (110a, 110b, 110c) each having a magnet body (114a, 114b, 114c) defining a respective longitudinal axis (116a, 116b, 116c),
   - wherein each sub-magnet (110a, 110b, 110c) creates a magnetic field and has a respective magnetic moment vector $(\vec{M_1}, \vec{M_2}, \vec{M_3})$ associated to the respective sub-magnet (110a, 110b, 110c), wherein at least one magnetic moment vector $(\vec{M_1}, \vec{M_2}, \vec{M_3})$ is inclined relative to the respective longitudinal axis (116a, 116b, 116c),
   - wherein two adjacent sub-magnets (110a, 110b, 110c) of the at least two sub-magnets (110a, 110b, 110c) are attached together to form a main body (114) of the permanent magnet assembly (110) having a main body longitudinal axis (116) and defining an assembly magnetic moment vector $(\vec{M})$, and
   - wherein the at least two sub-magnets (110a, 110b, 110c) are arranged coaxial to each other and are rotationally oriented relative to each other such that the assembly magnetic moment vector $(\vec{M})$ is less or equally inclined relative to the main body longitudinal axis (116) than a weighted average inclination of the magnetic moment vectors $(\vec{M_1}, \vec{M_2}, \vec{M_3})$ of the at least two sub-magnets (110a, 110b, 1 10c).

2. The permanent magnet assembly (110) of claim 1, wherein each magnetic moment vector $(\vec{M_1}, \vec{M_2}, \vec{M_3})$ is defined by a longitudinal vector component $(\vec{M_{L1}}, \vec{M_{L2}}, \vec{M_{L3}})$ extending along the respective longitudinal axis (116a, 116b, 116c) and a transversal vector component $(\vec{M_{T1}}, \vec{M_{T2}}, \vec{M_{T3}})$ extending orthogonally to the respective longitudinal axis (116a, 116b, 116c), wherein the combination of the longitudinal vector components $(\vec{M_{L1}}, \vec{M_{L2}}, \vec{M_{L3}})$ defines a resulting longitudinal vector component $(\vec{M_L})$ of the assembly magnetic moment vector $(\vec{M})$, and wherein the combination of the transversal vector components $(\vec{M_{T1}}, \vec{M_{T2}}, \vec{M_{T3}})$ defines a resulting transversal vector component $(\vec{M_T})$ of the assembly magnetic moment vector $(\vec{M})$.

3. The permanent magnet assembly (110) of claim 2, wherein the at least two sub-magnets (110a, 110b, 110c) are rotationally oriented relative to each other such that the combination of the respective transversal vector components $(\vec{M_{T1}}, \vec{M_{T2}}, \vec{M_{T3}})$ lead to a minimized resulting transversal vector component $(\vec{M_T})$.

4. The permanent magnet assembly (110) of any one of the preceding claims, wherein the at least two sub-magnets (110a, 110b, 110c) comprise a first sub-magnet (110a) and a second sub-magnet (110b) which are attached together.

5. The permanent magnet assembly (110) of claim 4, if at least dependent on claim 2, wherein the first sub-magnet (110a) and the second sub-magnet (110b) are rotationally oriented relative to each other such that the respective transversal vector components $(\overrightarrow{M_{T1}}, \overrightarrow{M_{T2}})$ are oriented in opposing directions.

6. The permanent magnet assembly (110) of any one of the preceding claims, if at least dependent on claims 2 and 4, wherein the first sub-magnet (110a) and the second sub-magnet (110b) are arranged coaxial to each other such that the longitudinal vector component $(\overrightarrow{M_{L1}}, \overrightarrow{M_{L2}})$ are oriented in the same direction.

7. The permanent magnet assembly (110) of any one of claims 4 to 6, wherein the at least two sub-magnets (110a, 110b, 110c) further comprise a third sub-magnet (110c) which is attached to one of the first or the second sub-magnet (110a, 110b).

8. The permanent magnet assembly (110) of claim 7, if at least dependent on claim 2, wherein if one of the transversal vector components $(\overrightarrow{M_{T1}}, \overrightarrow{M_{T2}}, \overrightarrow{M_{T3}})$ is larger than the sum of the lengths of the other transversal vector components $(\overrightarrow{M_{T1}}, \overrightarrow{M_{T2}}, \overrightarrow{M_{T3}})$, the other transversal vector components $(\overrightarrow{M_{T1}}, \overrightarrow{M_{T2}}, \overrightarrow{M_{T3}})$ are arranged in an opposing direction to the one of the transversal vector components $(\overrightarrow{M_{T1}}, \overrightarrow{M_{T2}}, \overrightarrow{M_{T3}})$ that is larger.

9. The permanent magnet assembly (110) of claim 7, if at least dependent on claim 2, wherein if none of the transversal vector components $(\overrightarrow{M_{T1}}, \overrightarrow{M_{T2}}, \overrightarrow{M_{T3}})$ is larger than the sum of the lengths of the other transversal vector components $(\overrightarrow{M_{T1}}, \overrightarrow{M_{T2}}, \overrightarrow{M_{T3}})$, the transversal vector components $(\overrightarrow{M_{T1}}, \overrightarrow{M_{T2}}, \overrightarrow{M_{T3}})$ are arranged such that the resulting transversal vector component $(\overrightarrow{M_T})$ of the assembly magnetic moment vector $(\overrightarrow{M})$ is minimized.

10. A user-borne device (100) operable in a sensing volume (M) created by a plurality of magnetometers (300), the user-borne device (100) comprising:

   at least one permanent magnet assembly (110) of any one of the preceding claims, and
   a housing (101) in which the permanent magnet assembly (110) is arranged at a predetermined location, specifically, wherein the user-borne device (100) is electrically and/or electronically passive.

11. A system (10) for determining a manipulation of a user-borne device (100) by a user (U), the system (10) comprising:

   the user-borne device (100) according to claim 10, and
   a plurality of magnetometers (300) configured to create a sensing volume and configured to measure a magnetic field associated with the at least one permanent magnet assembly (110), wherein the system (10) is configured to track movement and/or location of the at least one permanent magnet assembly (110) in at least five degrees of freedom.

12. The system (10) of claim 11, wherein the system (10) comprises a processing unit (400) configured to control a representation of the user-borne device (100) on an output device (500).

13. A method (600) for manufacturing a permanent magnet assembly (110) with a desired predetermined magnetic strength comprising:

   - Providing (610) a first sub-magnet (110a) and at least a second sub-magnet (110b, 110c) each having a magnet body (114a, 114b, 114c) defining a respective longitudinal axis (116a, 116b, 116c);
   - Putting (630) the first sub-magnet (110a) and the second sub-magnet (110b, 110c) coaxially together to form a main body (114) of the permanent magnet assembly (110) and such that the respective longitudinal axes (116a, 116b, 116c) coincide and define a main body longitudinal axis (116);
   - Evaluating (640) an assembly magnetic moment vector $(\overrightarrow{M})$ resulting from the magnetic field created conjoinedly by the first sub-magnet (110a) and the second sub-magnet (110b, 110c) by means of a processing unit (400);
   - Rotationally arranging (650) the first sub-magnet (110a) relative to the second sub-magnet (110b, 110c) about the respective longitudinal axis (116a, 116b, 116c) such that an inclination of the assembly magnetic moment vector $(\overrightarrow{M})$ with respect to the main body longitudinal axis (116) is minimal.

14. The method (600) of claim 13, wherein evaluating (640) the assembly magnetic moment vector $(\overrightarrow{M})$ further comprises evaluating an angular deviation ($\varphi$) of the assembly magnetic moment vector $(\overrightarrow{M})$ relative to the main body longitudinal axis (116) by means of the processing unit (400).

**15.** The method (600) of any one of claims 13 or 14, wherein putting (630) the sub-magnets (110a, 110b, 110c) together comprises fixedly locating one of the first sub-magnet (110a) and the second sub-magnet (110b, 110c) at a known location, specifically wherein the other of the first sub-magnet (1 10a) and the second sub-magnet (110b, 110c) is rotationally arranged (650) about the respective longitudinal axis (116a, 116b, 116c) to minimize the inclination of the assembly magnetic moment vector ($\vec{M}$) with respect to the main body longitudinal axis (116).

**Fig. 1**

**Fig. 2a**

**Fig. 2b**

**Fig. 3a**

**Fig. 3b**

**Fig. 4a**

**Fig. 4b**

**Fig. 5a**

**Fig. 5b**

**Fig. 5c**

**Fig. 5d**

**Fig. 6a**

**Fig. 6b**

**Fig. 7a**

**Fig. 7b**

**Fig. 8a**

**Fig. 8b**

**Fig. 9a**

**Fig. 9b**

**Fig. 9c**

**Fig. 10a**

**Fig. 10b**

**Fig. 10c**

600

```
┌─────────────────────┐
│         610         │
└─────────────────────┘
          │
          ▼
┌─────────────────────┐
│         620         │
└─────────────────────┘
          │
          ▼
┌─────────────────────┐
│         630         │
└─────────────────────┘
          │
          ▼
┌─────────────────────┐
│         640         │
└─────────────────────┘
          │
          ▼
┌─────────────────────┐
│         650         │
└─────────────────────┘
          │
          ▼
┌─────────────────────┐
│         660         │
└─────────────────────┘
```

**Fig. 11**

Europäisches
Patentamt
European
Patent Office
Office européen
des brevets

# EUROPEAN SEARCH REPORT

Application Number

EP 22 30 7018

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/215797 A1 (STEINICH KLAUS MANFRED [DE] ET AL) 8 September 2011 (2011-09-08) | 1-9,13, 15 | INV. G06F3/0346 |
| Y | * paragraph [0006] - paragraph [0013] * | 10-12,14 | G06F3/0354 |
|  | * paragraph [0033] * |  | G01B7/00 |
|  | * paragraph [0039] * |  | G01D5/14 |
|  | * paragraph [0046] * |  |  |
|  | * paragraph [0048] * |  |  |
|  | * paragraph [0050] - paragraph [0051] * |  |  |
|  | * paragraph [0085] - paragraph [0088] * |  |  |
|  | * figure 5 * |  |  |
|  | ----- |  |  |
| Y | US 2020/116524 A1 (DUPRE LA TOUR JEAN-MARIE [FR] ET AL) 16 April 2020 (2020-04-16) | 10-12 |  |
|  | * paragraph [0007] * |  |  |
|  | * paragraph [0043] * |  |  |
|  | * paragraph [0049] * |  |  |
|  | * paragraph [0093] * |  |  |
|  | * figure 1 * |  |  |
|  | ----- |  |  |
| Y | US 2019/301848 A1 (ALOUI SAIFEDDINE [FR] ET AL) 3 October 2019 (2019-10-03) | 14 | TECHNICAL FIELDS SEARCHED (IPC) |
|  | * paragraph [0001] - paragraph [0006] * |  | G01B |
|  | * paragraph [0071] * |  | G01D |
|  | ----- |  |  |

The present search report has been drawn up for all claims

| Place of search | Date of completion of the search | Examiner |
|---|---|---|
| Munich | 26 May 2023 | Guitarte Pérez, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                                        
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 30 7018

This annex lists the patent family members relating to the patent documents cited in the above-mentioned European search report.
The members are as contained in the European Patent Office EDP file on
The European Patent Office is in no way liable for these particulars which are merely given for the purpose of information.

26-05-2023

| Patent document cited in search report | | Publication date | Patent family member(s) | | Publication date |
|---|---|---|---|---|---|
| US 2011215797 | A1 | 08-09-2011 | DE 102010010388 | A1 | 08-09-2011 |
| | | | US 2011215797 | A1 | 08-09-2011 |
| US 2020116524 | A1 | 16-04-2020 | CN 110998569 | A | 10-04-2020 |
| | | | EP 3631647 | A1 | 08-04-2020 |
| | | | FR 3067138 | A1 | 07-12-2018 |
| | | | JP 7177095 | B2 | 22-11-2022 |
| | | | JP 2020524778 | A | 20-08-2020 |
| | | | US 2020116524 | A1 | 16-04-2020 |
| | | | WO 2018219889 | A1 | 06-12-2018 |
| US 2019301848 | A1 | 03-10-2019 | CN 109716168 | A | 03-05-2019 |
| | | | EP 3485299 | A1 | 22-05-2019 |
| | | | FR 3054040 | A1 | 19-01-2018 |
| | | | FR 3054041 | A1 | 19-01-2018 |
| | | | US 2019301848 | A1 | 03-10-2019 |
| | | | WO 2018011492 | A1 | 18-01-2018 |

EPO FORM P0459

For more details about this annex : see Official Journal of the European Patent Office, No. 12/82